# EUROPEAN PATENT APPLICATION

(11) **EP 4 669 007 A1**
(43) Date of publication of application: **24.12.2025**
(21) Application number: 23921697.1
(22) Date of filing: 14.02.2023
(51) Int. Cl.: H04W 74/08

(54) **INFORMATION TRANSMISSION METHOD AND APPARATUS**

(71) Applicant: FUJITSU LIMITED, Kawasaki-shi, Kanagawa 211-8588 (JP)
(72) Inventor: JIA, Meiyi, Beijing 100022 (CN); ZHANG, Jian, Beijing 100022 (CN)
(74) Representative: Haseltine Lake Kempner LLP
(86) International application number: PCT/CN2023/075972
(87) International publication number: WO 2024/168529

(57) **Abstract**

Embodiments of this disclosure provide an information transfer method and apparatus. The method includes: transmitting a first F1 message including information for obtaining uplink synchronization on a candidate cell to a first network device DU by a network device CU of the candidate cell.

## Description

### Technical Field

This disclosure relates to the field of communication technologies.

### Background

At present, a network device (such as a gNB) determines an expected timing advance (TA) setting and provide it to a user equipment (UE). The UE uses the provided TA to determine its uplink transmission time relative to a downlink reception time observed by the UE.

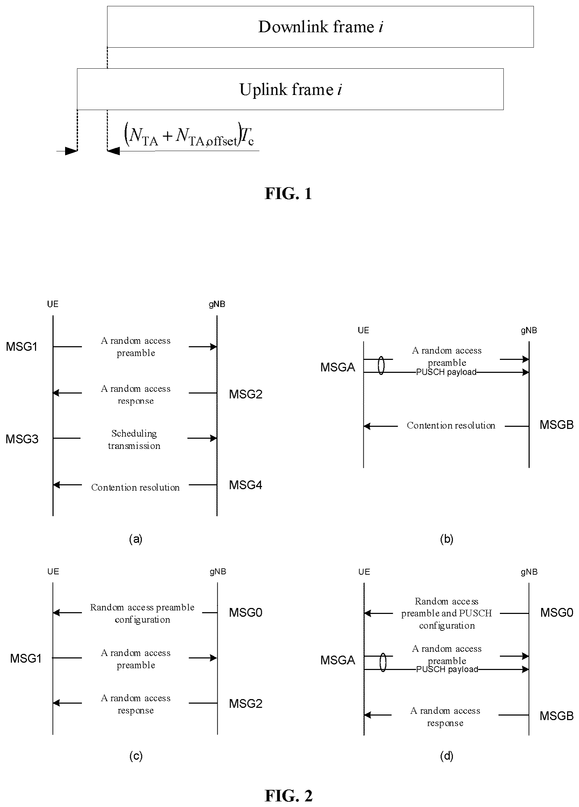

FIG. 1 is a schematic diagram of an uplink and downlink timing relationship at the UE side. As shown in FIG. 1, for example, uplink advance between uplink frame i and downlink frame i may be calculated according to (N_{TA}+N_{TA,offset})T_{c}; where, N_{TA} is an absolute timing advance value.

In order to establish time alignment of a timing advance group (TAG), a random access procedure is triggered.

The random access procedure includes two types: 4-step random access (4-step RA) using MSG1 and 2-step RA using MSGA. Both of the two types of random access procedures support contention-based random access (CBRA) and contention-free random access (CFRA).

FIG. 2 is a schematic diagram of information exchange between 4-step random access and 2-step random access.

MSG1 of the 4-step RA includes a preamble on a PRACH (physical random access channel). After transmission of MSG1, the UE monitors a response from the network in a configured window.

For CFRA, the network allocates a dedicated preamble for transmission of MSG1, and once a random access response is received from the network, the UE terminates the random access procedure (as shown in (c) of FIG. 2).

For CBRA, when a random access response is received, the UE uses a UL grant scheduled in the response to transmit MSG3, and monitors contention resolution (as shown in (a) of FIG. 2); if the contention resolution is unsuccessful after MSG3 transmission/retransmission, the UE turns back to MSG1 transmission.

MSGA of the 2-step RA includes a preamble on a PRACH and a payload on a PUSCH. After MSGA transmission, the UE monitors a response from the network in a configured window;
For CFRA, dedicated preambles and PUSCH resources for MSGA transmission are configured, and once a response is received from the network, the UE terminates the random access procedure (as shown in (d) of FIG. 2).

For CBFA, if the contention resolution is successful when a response from the network is received, the UE terminates the random access procedure (as shown in (b) of FIG. 2).

When carrier aggregation (CA) is configured, for random access of 2-step RA type, the random access is only performed on a primary cell (PCell), and at the same time, contention resolution may be cross-scheduled by the PCell.

When CA is configured, for a random access procedure of 4-step RA type, first 3 steps of CBRA always occur at the PCell, and contention resolution may be cross-scheduled by the PCell. The three steps of CFRA that start on the PCell are all on the PCell. CFRA on a secondary cell (SCell) is initiated by a gNB only to establish timing advance of a secondary TAG: this process is initiated by the gNB with a PDCCH command transmitted on a scheduling cell of an active SCell of the secondary TAG (step 0), preamble transmission occurs on the indicated SCell (step 1), and a random access response (step 2) occurs on the PCell.

The gNB provides TA to the UE via a random access response (RAR) or an MAC payload of MSGB.

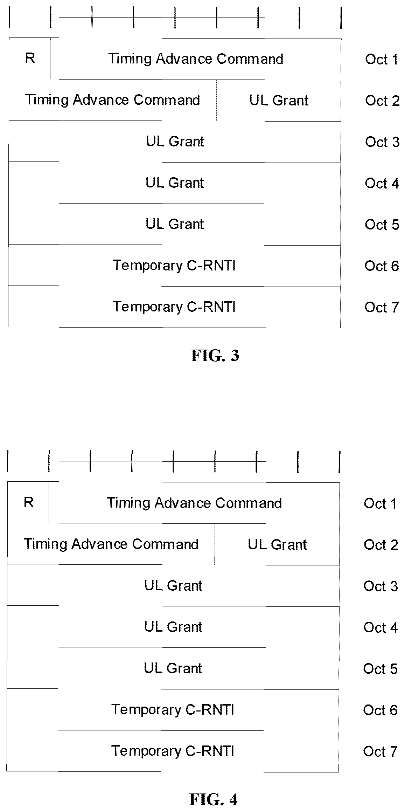

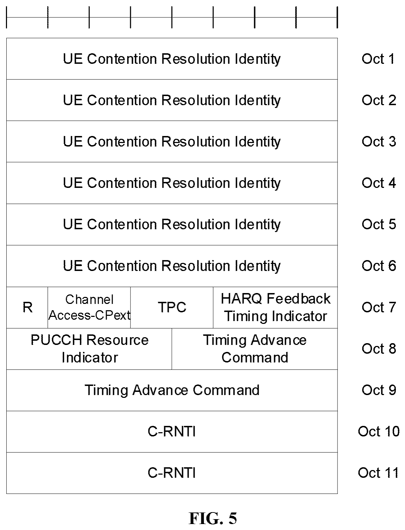

FIG. 3 is a schematic diagram of an MAC RAR, FIG. 4 is a schematic diagram of fallback RAR of the MAC payload of MSGB, and FIG. 5 is a schematic diagram of successRAR of the MAC payload of MSGB.

As shown in FIG. 3, MAC RAR is an RAR in the 4-step RA type, which indicates TA via 12 bits; as shown in FIG. 4, fallbackRAR is applicable to a case where a network only receives a preamble but does not receive a payload in the 2-step RA type, which indicates TA via 12 bits; and as shown in FIG. 5, successRAR is applicable in case of contention resolution in the 2-step RA type, which indicates TA via 12 bits.

When a terminal equipment moves from coverage area of a cell to coverage area of another cell, serving cell change needs to be performed at a certain point. Currently, serving cell changes are triggered by layer 3 (L3) measurement and completed by RRC signaling, and reconfiguration with sync triggered for a PCell change and a primary secondary cell (PSCell) change and SCells release, where applicable, are increased. All cases involve a complete layer 1, i.e. layer 1 (and layer 2, L2) reset, thereby resulting in longer delays, higher overhead and longer interruption times than beam switching mobility. An objective of L1/L2 mobility enhancement is to ensure serving cell changes via L1/L2 signaling for lower delay, overhead and interruption times.

For lower mobility delay, a mechanism and process of L1/L2-based inter-cell mobility include:
configuration and maintenance of multiple candidate cells to allow for quick application of configurations of the candidate cells;
for possible applicable scenarios, a dynamic switching mechanism between candidate serving cells (including special cells and secondary cells) based on L1/L2 signaling;
L1 enhancement of inter-cell beam management, including L1 measurement and reporting, as well as beam indication;
timing advance management;
CU-DU interface signaling to support L1/L2 mobility.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

Timing advance management is a part of a mechanism and process for achieving L1/L2 inter-cell mobility. It has been agreed to support the acquisition of timing advance (TA) of candidate cells before receiving a cell switch command in an L1/L2-triggered mobility (LTM) process. A mechanism for acquiring TA of candidate cells is a PDCCH ordered RACH. TA update of candidate cells, i.e. re-acquisition of TA, may be triggered by the network, in which initial TA is reused to acquire identical triggering mechanisms, i.e. PDCCH order triggered random access on a candidate cell.

The PDCCH ordered RACH acquires the TA of LTM candidate cells, wherein the PDCCH order is only triggered by a source cell, and indications of candidate cells and/or PRACH occasions of the candidate cells are introduced into its DCI. RACH resource configuration of the candidate cells is provided before the PDCCH order.

It was found by the inventors that in a case where a source cell and a candidate cell are different gNB-DUs, the source cell is unable to learn random access configuration (RO configuration) of the candidate cell, hence, PDCCH ordered RA on the candidate cell is unable to be triggered;
furthermore, according to the current mechanism, the candidate cell determines a TA value of the terminal via an RA preamble transmitted by the terminal, and in the case where the source cell and the candidate cell are not identical gNB-DUs, the source cell is unable to learn a TA value of the candidate cell, and is unable to provide it to the terminal equipment.

In order to solve one or more of the above problems, embodiments of this disclosure provide an information transfer method and apparatus.

According to a first aspect of the embodiments of this disclosure, there is provided an information transfer apparatus, the apparatus including: a first transmitting unit configured to transmit a first F1 message including information for obtaining uplink synchronization on a candidate cell to a first network device DU by a network device CU of the candidate cell.

According to a second aspect of the embodiments of this disclosure, there is provided an information transfer apparatus, the apparatus including: a fifth receiving unit configured to receive a first F1 message including information for obtaining uplink synchronization on a candidate cell by a first network device DU from a network device CU of the candidate cell; and a third transmitting unit configured to transmit DCI by the first network device DU to a terminal equipment.

According to a third aspect of the embodiments of this disclosure, there is provided an information transfer apparatus, configured in a terminal equipment, the apparatus including: a sixth receiving unit configured to receive DCI from a first network device DU, the DCI comprising random access configuration of a candidate cell and/or information on the candidate cell.

According to a fourth aspect of the embodiments of this disclosure, there is provided a network device, including the apparatus as described in the embodiment(s) of the first aspect and/or the second aspect of this disclosure.

According to a fifth aspect of the embodiments of this disclosure, there is provided a terminal equipment, including the apparatus as described in the embodiment of the third aspect of this disclosure.

According to a sixth aspect of the embodiments of this disclosure, there is provided a communication system, including the network device as described in the embodiment of the fourth aspect of this disclosure and/or the terminal equipment as described in the embodiment of the fifth aspect of this disclosure.

According to a seventh aspect of the embodiments of this disclosure, there is provided an information transfer method, the method including: transmitting a first F1 message including information for obtaining uplink synchronization on a candidate cell to a first network device DU by a network device CU of the candidate cell.

According to an eighth aspect of the embodiments of this disclosure, there is provided an information transfer method, the method including: receiving a first F1 message including information for obtaining uplink synchronization on a candidate cell by a first network device DU from a network device CU of the candidate cell; and transmitting DCI by the first network device DU to a terminal equipment.

According to a ninth aspect of the embodiments of this disclosure, there is provided an information transfer method, the method including: receiving DCI by a terminal equipment from a first network device DU, the DCI including random access configuration of a candidate cell and/or information on the candidate cell.

According to a tenth aspect of the embodiments of this disclosure, there is provided a computer readable program code, which, when executed in an information transfer apparatus or a network device, will cause the information transfer apparatus or the network device to carry out the information transfer method as described in the embodiment(s) of the seventh and/or the eighth aspect of this disclosure.

According to a eleventh aspect of the embodiments of this disclosure, there is provided a computer readable medium, including a computer readable program code, which will cause an information transfer apparatus or a network device to carry out the information transfer method as described in the embodiment(s) of the seventh and/or the eighth aspect of this disclosure.

According to a twelfth aspect of the embodiments of this disclosure, there is provided a computer readable program code, which, when executed in an information transfer apparatus or a terminal equipment, will cause the information transfer apparatus or the terminal equipment to carry out the information transfer method as described in the embodiment(s) of the seventh and/or the eighth aspect of this disclosure.

According to a thirteenth aspect of the embodiments of this disclosure, there is provided a computer readable medium, including a computer readable program code, which will cause an information transfer apparatus or a terminal equipment to carry out the information transfer method as described in the embodiment(s) of the seventh and/or the eighth aspect of this disclosure.

Advantages of the embodiments of this disclosure exist in that by transmitting a first F1 message including information for obtaining uplink synchronization on a candidate cell to a first network device DU by a network device CU of the candidate cell, in the case where the source cell and the candidate cell are different gNB-DUs, the source cell is able to acquire information for obtaining uplink synchronization on the candidate cell, thereby triggering the PDCCH ordered RA on the candidate cell;
furthermore, when the information for obtaining uplink synchronization on the candidate cell includes a TA value, in the case where the source cell and the candidate cell are different gNB-DUs, the source cell is able to acquire the TA value of the candidate cell, thereby providing the TA value of the candidate cell to the terminal equipment, and reducing interruption time of LTM.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of an uplink and downlink timing relationship at a UE side;
FIG. 2 is a schematic diagram of information exchange between 4-step random access and 2-step random access;
FIG. 3 is a schematic diagram of an MAC RAR;
FIG. 4 is a schematic diagram of a fallback RAR of an MAC payload of MSGB;
FIG. 5 is a schematic diagram of a success RAR of the MAC payload of MSGB;

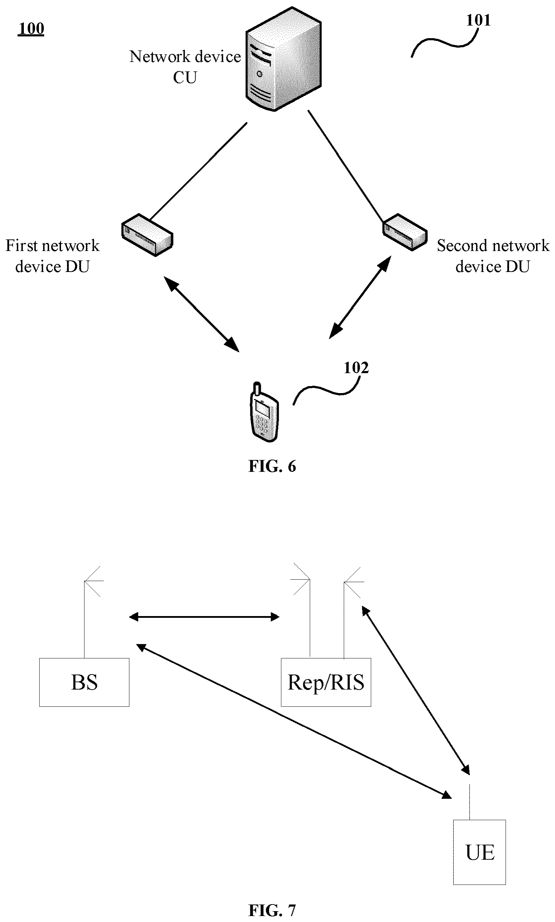

FIG. 6 is a schematic diagram of a communication system of the embodiments of this disclosure;
FIG. 7 is a schematic diagram of a scenario of deployment of a repeater/RIS;

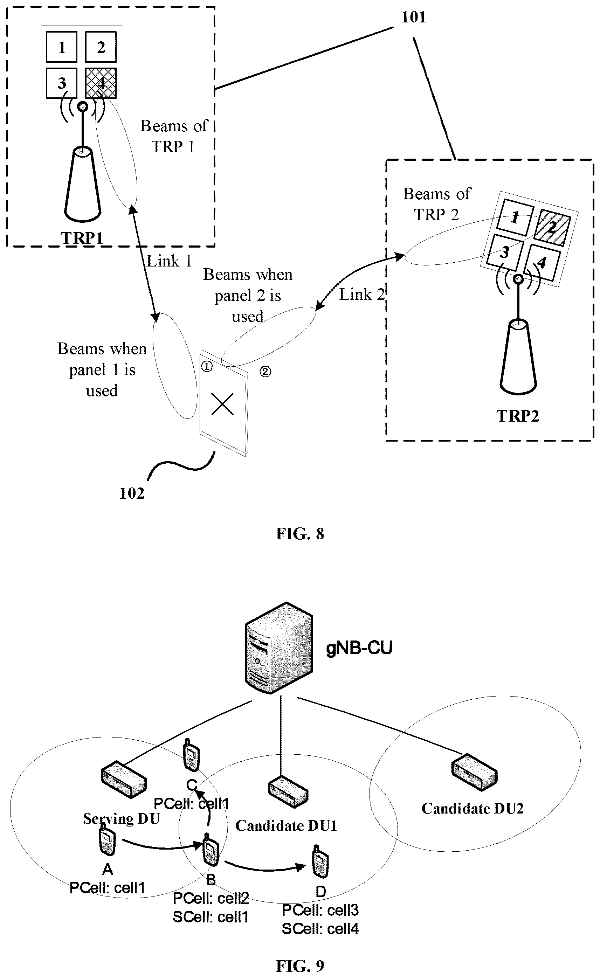

FIG. 8 is a schematic diagram of a scenario of multi-TRP operations;
FIG. 9 is a schematic diagram of a scenario of L1/L2-based inter-cell mobility;

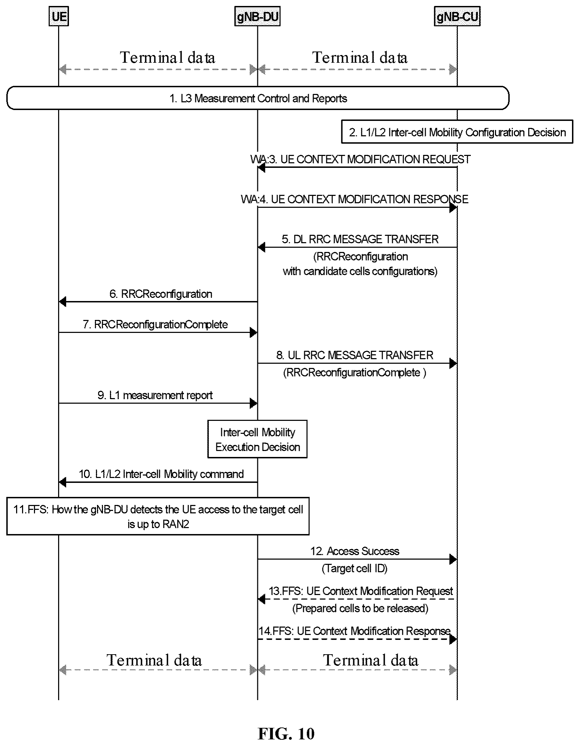

FIG. 10 is a schematic diagram of a process of intra-gNB-DU L1/L2-triggered mobility;

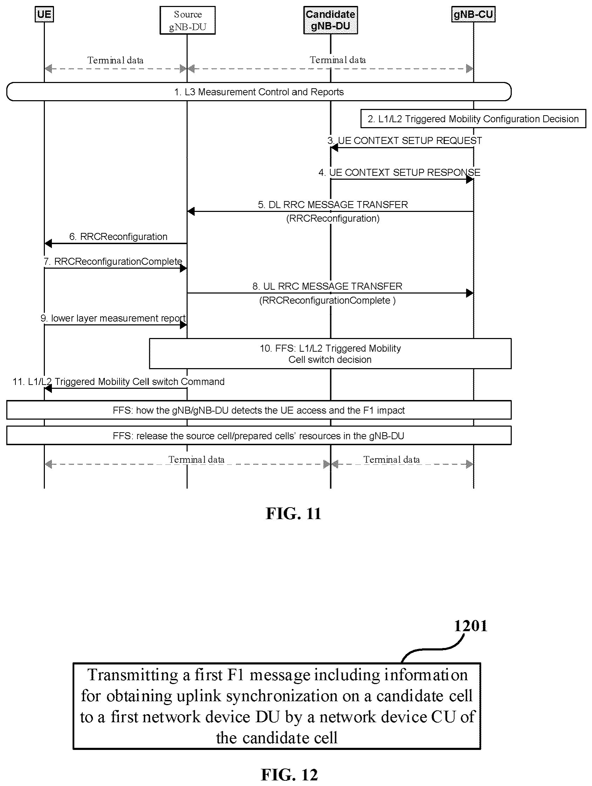

FIG. 11 is a schematic diagram of a process of inter-gNB-DU L1/L2-triggered mobility;
FIG. 12 is a schematic diagram of the information transfer method of embodiment 1 of this disclosure;

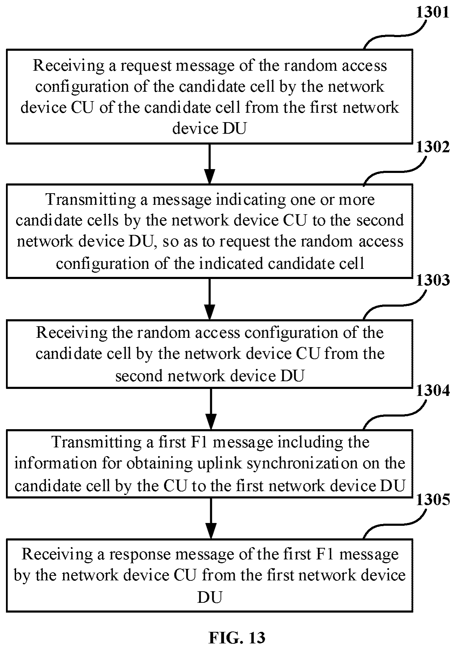

FIG. 13 is a schematic diagram of one implementation of the information transfer method of embodiment 1 of this disclosure;

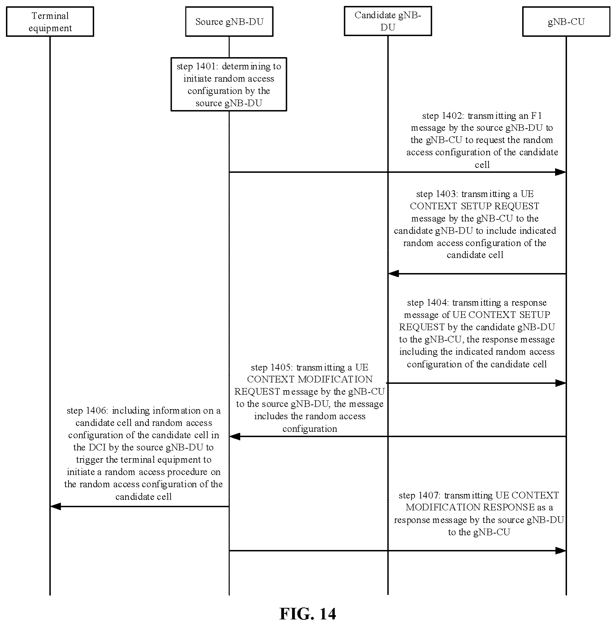

FIG. 14 is a flowchart of one implementation of the information transfer method of embodiment 1 of this disclosure;

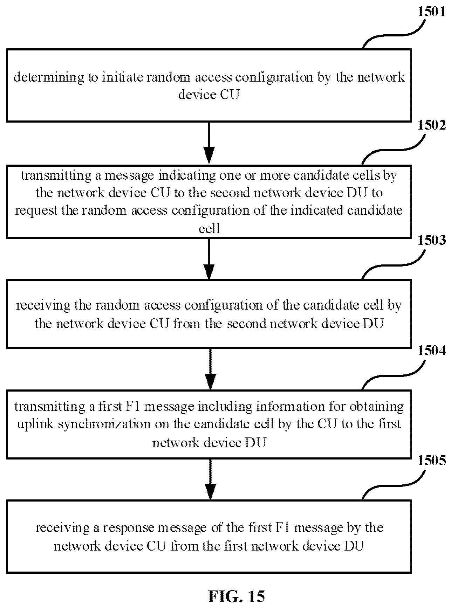

FIG. 15 is a schematic diagram of another implementation of the information transfer method of embodiment 1 of this disclosure;

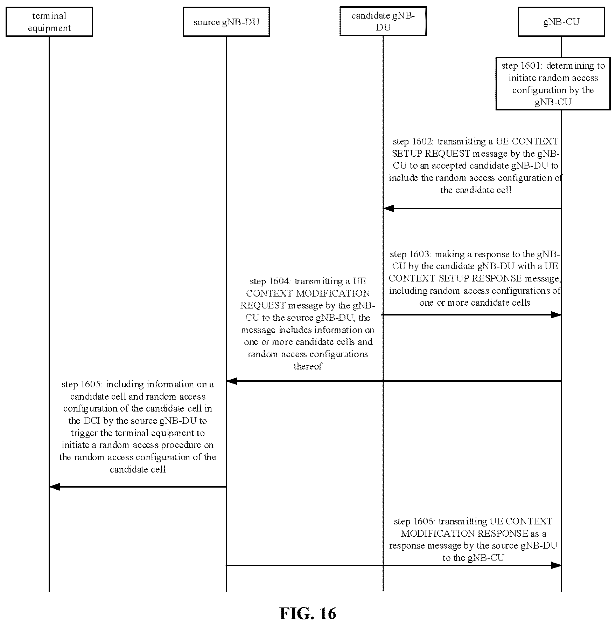

FIG. 16 is a schematic diagram of a further implementation of the information transfer method of embodiment 1 of this disclosure;

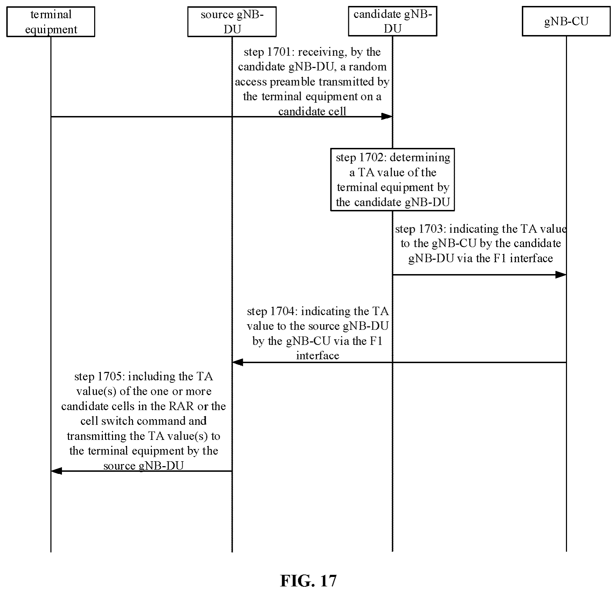

FIG. 17 is a schematic diagram of a TA value transfer process of embodiment 1 of this disclosure;

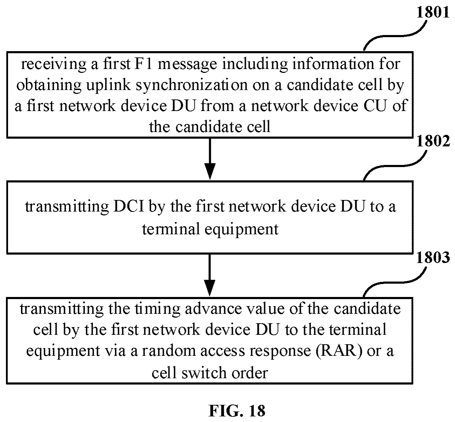

FIG. 18 is a schematic diagram of the information transfer method of embodiment 2 of this disclosure;

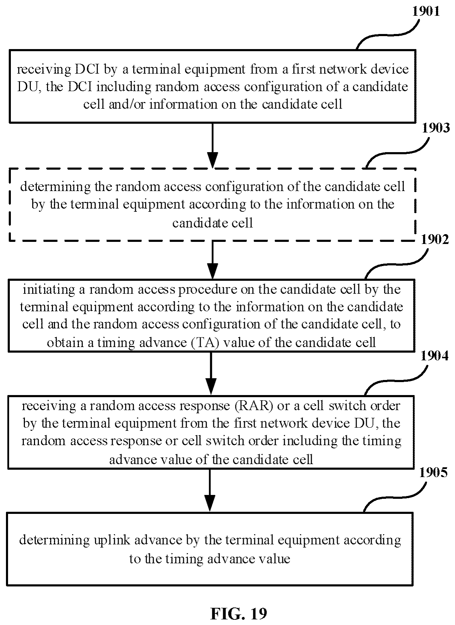

FIG. 19 is a schematic diagram of the information transfer method of embodiment 3 of this disclosure;

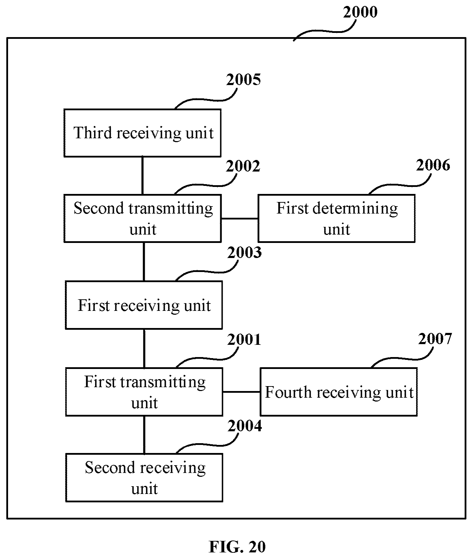

FIG. 20 is a schematic diagram of the information transfer apparatus of embodiment 4 of this disclosure;

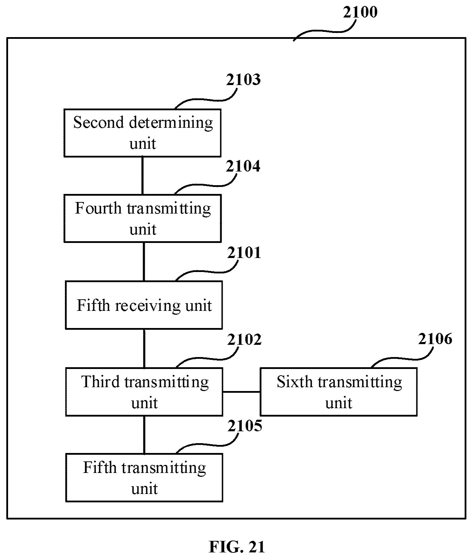

FIG. 21 is a schematic diagram of the information transfer apparatus of embodiment 5 of this disclosure;

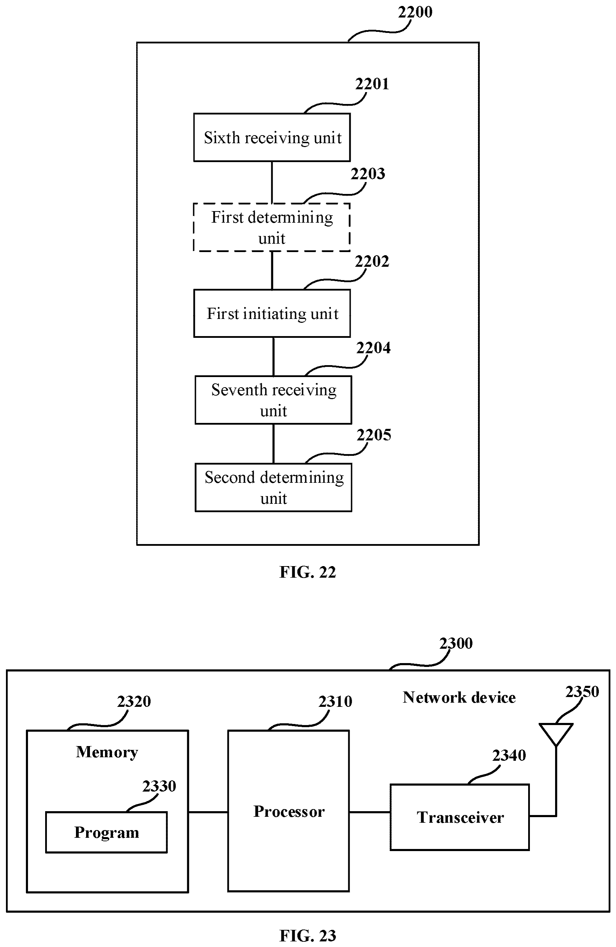

FIG. 22 is a schematic diagram of the information transfer apparatus of embodiment 6 of this disclosure;
FIG. 23 is a schematic diagram of a systematic structure of the network device of embodiment 7 of this disclosure; and

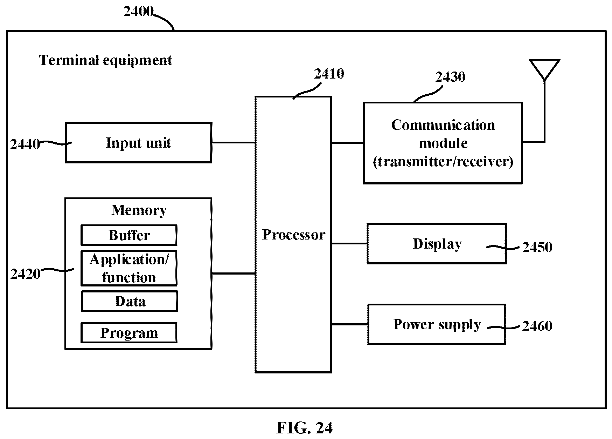

FIG. 24 is a schematic diagram of a systematic structure of the terminal equipment of embodiment 8 of this disclosure.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), high-speed packet access (HSPA), and New Radio (NR), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G in the future, etc., and/or other communication protocols that are currently known or will be developed in the future.

In the embodiments of this disclosure, the term "network device" or "network node", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.), and an IAB (integrated access and backhaul) node or an IAB-DU or an IAB-donor. The term "base station" may include some or all of its functions, and each base station may provide communication coverage for a specific geographical area. And a term "cell" may refer to a base station and/or its coverage area, depending on a context of the term. One gNB-DU supports one or more cells, and one cell is supported by one gNB-DU only.

In the embodiments of this disclosure, the term "user equipment (UE)" refers to, for example, an equipment accessing to a communication network and receiving network services via a network device, may also be referred to as "terminal equipment (TE)". The terminal equipment may be fixed or mobile, and may also be referred to as a mobile station (MS), a terminal, a subscriber station (SS), an access terminal (AT), such as a terminal equipment supported by an IAB-node or IAB-donor under an IAB architecture.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, "when...", "in a case of...", "for a case where..." and "if" all indicate being based on one or more conditions or states, and in addition, these expressions are interchangeable.

Scenarios of the embodiments of this disclosure shall be described below by way of examples; however, this disclosure is not limited thereto.

FIG. 6 is a schematic diagram of a communication system of an embodiment of this disclosure, in which a case where a terminal equipment and a network device are taken as examples is schematically shown. As shown in FIG. 6, a communication system 100 may include a network device 101 and a terminal equipment 102. The network device 101 includes a network device CU (gNB-CU), a first network device DU, and a second network device DU, both the first network device DU and the second network device DU belonging to the network device CU.

When the terminal equipment 102 performs inter-gNB-DU cell change, the first network device DU is a source gNB-DU, which is also referred to as a serving gNB-DU; and the second network device DU is a candidate gNB-DU, which is also referred to as a candidate target gNB-DU or a target candidate gNB-DU.

For the sake of simplicity, only one terminal equipment is taken as an example in FIG. 6 for illustration; however, multiple terminal equipments may also be included.

In the embodiments of this disclosure, FIG. 6 may also represent an IAB network, in which the terminal equipment 102 may be a UE or an IAB-MT. For an intra-IAB-donor-DU IAB-donor-CU or inter-IAB-node-DU cell change, the first network device DU and the second network device DU are different IAB-donor-DUs or IAB-node-DUs in the same IAB-donor-CU, that is, when the terminal equipment 102 needs to perform cell change, the first network device DU is a source IAB-donor-DU, also referred to as a serving IAB-donor-DU, and the second network device DU is a target/candidate IAB-donor-DU/IAB-node-DU, also referred to as a candidate target. IAB-donor-DU/IAB-node-DU or a target candidate IAB-donor-DU/IAB-node-DU.

In the embodiment of this disclosure, existing traffics or traffics that may be implemented in the future may be performed between the first network device DU and/or the second network device DU and the terminal equipment 102. For example, such traffics may include but not limited to enhanced mobile broadband (eMBB), massive machine type communication (mMTC), and ultra-reliable and low-latency communication (URLLC), etc.

In an existing communication system, in order to increase coverage, an additional node or device or entity is added between a base station (such as a gNB or gNB-CU) and a mobile terminal (terminal equipment), which has a simplified protocol stack and/or function for processing (such as amplifying, and routing, etc.) signals and/or symbols received from the base station and/or the mobile terminal and transmitting them to the mobile terminal and/or the base station.

The additional node or device or entity may be a repeater, an RIS (reconfigurable intelligent surface), and a TRP (transmit/receive point), etc.

The scenario where an additional node or device or entity is used between the base station and the mobile terminal is applicable to the embodiments of this disclosure, for example, the scenario includes:

### (1) Scenario of repeater/RIS

FIG. 7 is a schematic diagram of the scenario of deployment of repeater/RIS.

As shown in FIG. 7, a repeater/RIS is a device that receives, processes and transmits radiated or conducted RF carriers in a downlink direction (from a base station to a mobile area) and an uplink direction (from the mobile terminal to the base station).

For a repeater, processing includes power amplification, and the repeater is, for example, an NCR (network controlled repeater).

For an RIS, processing includes beamforming, and reshaping propagation environments, etc. In an operating frequency band where only a downlink or an uplink is designated, the designated uplink or downlink is repeated only.

### (2) Scenario of multi-TRP operations

A TRP is a part of a gNB that receives signals from and/or transmits signals to a terminal UE.

FIG. 8 is a schematic diagram of the scenario of multi-TRP operations. As shown in FIG. 8, in the multi-TRP operations, a serving cell may schedule the UE from 2 TRPs to provide better PDSCH coverage, reliability and/or data rate. For the multi-TRP, there are two different operating modes, single DCI and multiple DCI. For these two modes, within configuration provided by an RRC layer, control of uplink and downlink operations is performed by a physical layer and MAC. In the single DCI mode, the UE is scheduled by two TRPs via identical DCI, and in the multiple DCI mode, the UE is scheduled by separate DCI of each TRP. This embodiment is applicable to the mode of multiple DCI.

In the embodiments of this disclosure, the two TRPs may belong to identical cells or different cells.

As shown in FIG. 8, a gNB where TRP-2 is located is an additional node or device or entity, and a gNB where TRP-1 is located is a base station. TRP-2 and TRP-1 may belong to different gNBs, and may exchange information via an X2 interface; or, TRP-2 and TRP-1 may be a part of a gNB and belong to the same gNB, and exchange information via an internal interface.

FIG. 9 is a schematic diagram of a scenario of L1/L2-based inter-cell mobility.

When a terminal equipment moves from a coverage area of a cell to a coverage area of another cell, L1/L2 triggered serving cell change needs to be executed at a certain point. The scenario of L1/L2-based inter-cell mobility includes:
scenarios of inter-DU and intra-DU: design of L1/L2-based mobility of the intra-DU and inter-DU shall share as many commonalities as possible under reasonable circumstances;
switching, i.e. PCell mobility/change, involves non-CA (i.e. PCell only) and CA scenarios (i.e. PCell and SCell (s)), including that:
   a target PCell/target SCell (s) is/are not the current serving cell (i.e. a scenario where CA with PCell change>CA), such as the LTM from terminal B to terminal D in FIG. 9;
   the target SCell is the current PCell, such as the LTM from terminal A to terminal B in FIG. 9;
   the target PCell is a current SCell, such as the LTM from terminal B to terminal C in FIG. 9;
   the CA scenario supports a PCell change without SCell changes and a PCell changes with SCell changes;
   an NR-DC scenario is supported, at least for a PSCell change involving no MN, i.e. intra-SN;
   Basically, inter-frequency scenarios (including mobility to an inter-frequency cell of a non-current serving cell) are supported, and if feasible, inter-frequency L1 measurement is supported.

In the embodiments of this disclosure, a source cell and a target cell may possibly be synchronous or asynchronous, and may operate on FR1 and FR2.

FIG. 10 is a schematic diagram of an intra-gNB-DU L1/L2-triggered mobility procedure. As shown in FIG. 10, when the terminal moves within the same gNB-DU, NR operations of L1/L2-triggered mobility include:
1. transmitting an *MeasurementReport* message including measurements of neighboring cells by the UE to the gNB-DU, and transmitting a UL RRC MESSAGE TRANSFER message carrying the received *MeasurementReport* message by the gNB-DU to a gNB-CU;
2. determining by the gNB-CU to initiate configuration of L1/L2 inter-cell mobility;
3. assuming that the gNB-CU transmits a UE CONTEXT MODIFICATION REQUEST message to the gNB-DU to include a target candidate cell;
4. assuming that if a request for configuring L1/L2 inter-cell mobility is accepted, making response to the UE CONTEXT MODIFICATION REQUEST message by the gNB-DU, including generated agreed low-layer RRC configuration of the candidate cell;
5. transmitting a DL RRC MESSAGE TRANSFER message by the gNB-CU to the gNB-DU, including a generated *RRCReconfiguration* message carrying the configuration of L1/L2 inter-cell mobility;
6. transferring the received *RRCReconfiguration* message by the gNB-DU to the UE;
7. making response to the gNB-DU by the UE with an *RRCReconfigurationComplete* message;
8. transferring the *RRCReconfigurationComplete* message by the gNB-DU to the gNB-CU via a UL RRC MESSAGE TRANSFER message;
9. transmitting an L1 measurement result by the UE to the gNB-DU, and determining to execute L1/L2 inter-cell mobility by the gNB-DU;
10. transmitting an L1/L2 inter-cell mobility command by the gNB-DU to the UE;
11. FFS: how the gNB-DU detects whether the UE accesses to a cell is dependent on RAN2;
12. indicating by the gNB-DU to the gNB-CU via an Access Success message that the UE successfully accesses the target cell, including a target cell ID;
13. FFS: the gNB-CU may transmit a UE Context Modification message to the gNB-DU to release prepared resources of the cell;
14. FFS: the gNB-DU makes response with a UE CONTEXT MODIFICATION RESPONSE message.

FIG. 11 is a schematic diagram of an inter-gNB-DU L1/L2-triggered mobility procedure. As shown in FIG. 11, when the terminal moves from a gNB-DU within the same gNB-CU to another gNB-DU, the NR operation procedure of L1/L2-triggered mobility includes:
1. transmitting a *MeasurementReport* message including measurements of neighboring cells by the UE to the source gNB-DU, and transmitting a UL RRC MESSAGE TRANSFER message carrying the received *MeasurementReport* message by the source gNB-DU to the gNB-CU;
2. determining to initiate configuration of L1/L2 inter-cell mobility by the gNB-CU;
3. transmitting a UE CONTEXT SETUP REQUEST message by the gNB-CU to a candidate gNB-DU to include a target candidate cell;
4. making a response to the gNB-CU by the candidate gNB-DU with a UE CONTEXT SETUP RESPONSE message if it determines to accept the request for configuring LTM, including low-layer RRC configuration of the generated accepted target candidate cell;
5. transmitting a DL RRC MESSAGE TRANSFER (or UE CONTEXT MODIFICATION REQUEST) message by the gNB-CU to a source gNB-DU, including a generated *RRCReconfiguration* message carrying configuration of L1/L2 inter-cell mobility;
6. transferring the received *RRCReconfiguration* message by the source gNB-DU to the UE;
7. making a response to the gNB-DU source by the UE with an *RRCReconfigurationComplete* message;
8. transferring the *RRCReconfigurationComplete* message by the source gNB-DU to the gNB-CU via a UL RRC MESSAGE TRANSFER (or UE CONTEXT MODIFICATION RESPONSE) message;
9. transmitting a low-layer measurement result by the UE to the source gNB-DU;
10. determining by the source gNB-DU to perform L1/L2-triggered mobility to a candidate target cell; and
11. transmitting a L1/L2-triggered mobility cell switch command by the source gNB-DU to the UE.

In the embodiments of this disclosure, L1 refers to layer 1, such as including a physical layer;
L2 refers to layer 2, which includes, for example, an MAC layer or an MAC sublayer, a PDCP layer or a PDCP sublayer, and an RLC layer or an RLC sublayer;
and L3 refers to layer 3, such as including an RRC layer.

Implementations of the embodiments of this disclosure shall be described below with reference to the accompanying drawings; however, these implementations are illustrative only, and are not intended to limit this disclosure.

### Embodiment 1

The embodiment of the first aspect provides an information transfer method. The method is applicable to a network device CU, such as the network device CU in FIG. 6, the base station (BS) in FIG. 7, the gNB-CU to which TRP1/TRP2 belong(s) in FIG. 8, or the gNB-CU in FIG. 9.

FIG. 12 is a schematic diagram of the information transfer method of embodiment 1 of this disclosure. As shown in FIG. 12, the method includes:
step 1201: transmitting a first F1 message including information for obtaining uplink synchronization on a candidate cell to a first network device DU by a network device CU of the candidate cell.

Hence, by transmitting a first F1 message including information for obtaining uplink synchronization on a candidate cell to a first network device DU by a network device CU of the candidate cell, in the case where the source cell and the candidate cell are different gNB-DUs, the source cell is able to acquire information for obtaining uplink synchronization on the candidate cell, thereby triggering the PDCCH ordered RA on the candidate cell.

In the embodiments of this disclosure, the candidate cell may be replaced with a target candidate cell or a candidate configuration.

In the embodiments of this disclosure, the source cell may be replaced with a serving cell.

In the embodiments of this disclosure, the network device CU of the candidate cell and the network device CU of the serving cell are the same network device CU, such as the same gNB-CU.

In the embodiments of this disclosure, the first network device DU is a source network device DU, such as a source gNB-DU (serving gNB-DU), i.e. a gNB-DU to which the source cell belongs.

In the embodiments of this disclosure, the information for obtaining uplink synchronization on the candidate cell is included in the first F1 message, that is, the network device CU of the candidate cell transmits a message to the first network device DU via an F1 interface, including the information for obtaining uplink synchronization on the candidate cell.

In the embodiments of this disclosure, the information for obtaining uplink synchronization on the candidate cell includes at least one of random access configuration of the candidate cell, information on the candidate cell and a timing advance (TA) value.

In the embodiments of this disclosure, the random access configuration includes at least one piece of the following information:
information on time-frequency resources of random access, such as a PRACH MASK index;
random access preamble information, such as an RA preamble index; and
downlink reference signal (DL RS) information, such as an SSB index, and a CSI-RS resource ID.

In the embodiments of this disclosure, the random access configuration includes one random access configuration, or the random access configuration includes multiple random access configurations and corresponding candidate cell information.

In the embodiments of this disclosure, for the case where the information for obtaining uplink synchronization on the candidate cell includes the random access configuration of the candidate cell, i.e. the first F1 message includes the random access configuration of the candidate cell, FIG. 13 is a schematic diagram of one implementation of the information transfer method of embodiment 1 of this disclosure. As shown in FIG. 13, the method includes:
step 1301: receiving a request message of the random access configuration of the candidate cell by the network device CU of the candidate cell from the first network device DU;
step 1302: transmitting a message indicating one or more candidate cells by the network device CU to the second network device DU to request the random access configuration of the indicated candidate cell;
step 1303: receiving the random access configuration of the candidate cell by the network device CU from the second network device DU;
step 1304: transmitting a first F1 message including the information for obtaining uplink synchronization on the candidate cell by the CU to the first network device DU; and
step 1305: receiving a response message of the first F1 message by the network device CU from the first network device DU.

In the embodiments of this disclosure, steps 1301-1303 and step 1305 are optional.

In the embodiments of this disclosure, the second network device DU is a candidate network device DU, such as a candidate gNB-DU (target candidate gNB-DU), i.e. a gNB-DU to which the candidate cell belongs.

The first network device DU and the second network device DU belong to the same network device CU.

FIG. 14 is a flowchart of one implementation of the information transfer method of embodiment 1 of this disclosure, corresponding to the method shown in FIG. 13. In FIG. 14, the gNB-CU corresponds to the network device CU, the source gNB-DU corresponds to the first network device DU, and the candidate gNB-DU corresponds to the second network device DU.

As shown in FIG. 14, the method includes:
step 1401: determining to initiate random access configuration by the source gNB-DU, such as determining to initiate random access configuration by the source gNB-DU based on an L1 measurement result;
step 1402: transmitting an F1 message by the source gNB-DU to the gNB-CU to request the random access configuration of the candidate cell;
step 1403: transmitting a UE CONTEXT SETUP REQUEST message by the gNB-CU to the candidate gNB-DU to include indicated random access configuration of the candidate cell;
step 1404: transmitting a response message of UE CONTEXT SETUP REQUEST by the candidate gNB-DU to the gNB-CU, the response message including the indicated random access configuration of the candidate cell;
step 1405: transmitting a UE CONTEXT MODIFICATION REQUEST message by the gNB-CU to the source gNB-DU, the message includes the random access configuration,
in addition, if random access configurations of multiple candidate cells are requested, the message includes multiple random access configurations and corresponding candidate cell information;
furthermore, the message may be a new F1 message or an existing F1 message other than the UE CONTEXT MODIFIATION REQUEST message;
step 1406: including information on a candidate cell and random access configuration of the candidate cell in the DCI by the source gNB-DU to trigger the terminal equipment to initiate a random access procedure on the random access configuration of the candidate cell to, for example, obtain a TA value of the candidate cell; and
step 1407: transmitting UE CONTEXT MODIFICATION RESPONSE as a response message by the source gNB-DU to the gNB-CU;
in addition, when a new F1 message or another existing F1 message instead of the UE CONTEXT MODIFICATION REQUEST message is used in step 1405, the response message may be a response message of the new F1 message or the existing F1 message, rather than UE CONTEXT MODIFICATION RESPONSE.

In the embodiments of this disclosure, steps 1401-1404 and steps 1406 and 1407 are optional. In addition, an order of steps 1406 and 1407 is not limited, that is, step 1406 may be executed first and then step 1407 is executed, or step 1407 may be executed first and then step 1406 is executed, or steps 1406 and 1407 may be executed simultaneously.

For the case where the information for obtaining uplink synchronization on the candidate cell includes the random access configuration of the candidate cell, i.e. the first F1 message includes the random access configuration of the candidate cell, FIG. 15 is a schematic diagram of another implementation of the information transfer method of embodiment 1 of this disclosure. As shown in FIG. 15, the method includes:
step 1501: determining to initiate random access configuration by the network device CU;
step 1502: transmitting a message indicating one or more candidate cells by the network device CU to the second network device DU to request the random access configuration of the indicated candidate cell;
step 1503: receiving the random access configuration of the candidate cell by the network device CU from the second network device DU;
step 1504: transmitting a first F1 message including information for obtaining uplink synchronization on the candidate cell by the CU to the first network device DU; and
step 1505: receiving a response message of the first F1 message by the network device CU from the first network device DU.

In the embodiments of this disclosure, steps 1501-1503 and step 1505 are optional.

FIG. 16 is a schematic diagram of a further implementation of the information transfer method of embodiment 1 of this disclosure, corresponding to the method shown in FIG. 15. In FIG. 16, the gNB-CU corresponds to the network device CU, the source gNB-DU corresponds to the first network device DU, and the candidate gNB-DU corresponds to the second network device DU.

As shown in FIG. 16, the method includes:
step 1601: determining to initiate random access configuration by the gNB-CU;
step 1602: transmitting a UE CONTEXT SETUP REQUEST message by the gNB-CU to an accepted candidate gNB-DU to include the random access configuration of the candidate cell;
step 1603: making a response to the gNB-CU by the candidate gNB-DU with a UE CONTEXT SETUP RESPONSE message, including random access configurations of one or more candidate cells;
step 1604: transmitting a UE CONTEXT MODIFICATION REQUEST message by the gNB-CU to the source gNB-DU, the message includes information on one or more candidate cells and random access configurations thereof;
in addition, the message may also be a new F1 message or an existing F1 message other than the UE CONTEXT MODIFICATION REQUEST message;
step 1605: including information on a candidate cell and random access configuration of the candidate cell in the DCI by the source gNB-DU to trigger the terminal equipment to initiate a random access procedure on the random access configuration of the candidate cell to, for example, obtain a TA value of the candidate cell; and
step 1606: transmitting UE CONTEXT MODIFICATION RESPONSE as a response message by the source gNB-DU to the gNB-CU;
in addition, when a new F1 message or another existing F1 message instead of the UE CONTEXT MODIFICATION REQUEST message is used in step 1604, the response message may be a response message of the new F1 message or the existing F1 message, rather than UE CONTEXT MODIFICATION RESPONSE.

In the embodiments of this disclosure, steps 1601-1603 and steps 1605 and 1606 are optional. In addition, an order of steps 1605 and 1606 is not limited, that is, step 1605 may be executed first and then step 1606 is executed, or step 1606 may be executed first and then step 1605 is executed, or steps 1605 and 1606 may be executed simultaneously.

In the embodiments of this disclosure, for the random access procedure on the candidate cell, the terminal equipment determines to perform random access according to the random access configuration indicated by the DCI and/or the candidate cell information. For example, in steps 1406 and 1605, the source gNB-DU includes information on a candidate cell and random access configuration of the candidate cell in the DCI to trigger the terminal equipment to initiate the random access procedure on the random access configuration of the candidate cell.

In the embodiments of this disclosure, different from the embodiments shown in FIGs. 13-16, the information for obtaining uplink synchronization on the candidate cell transmitted by the gNB-CU to the source gNB-DU includes the information on the candidate cell but does not include the random access configuration of the candidate cell. Correspondingly, the DCI transmitted by the source gNB-DU to the terminal equipment includes the information on the candidate cell but does not include the random access configuration of the candidate cell, in which case the information on the candidate cell is used by a terminal equipment to determine the random access configuration of the candidate cell.

In the embodiments of this disclosure, the random access configuration determined by the terminal equipment according to the information on a candidate cell includes at least one of the following:
random access configuration included in the candidate cell configuration;
random access configuration for obtaining timing advance included in the candidate cell configuration;
random access configuration appearing first included in the candidate cell configuration, for example, the random access configuration appearing first is random access configuration for obtaining TA;
random access configuration for obtaining timing advance appearing first included in the candidate cell configuration;
random access configuration included in the candidate cell configuration, an L1 measurement result of a downlink reference signal to which the random access configuration corresponds is better than a configured threshold; and
a next available random access configuration included in the candidate cell configuration after the DCI is received, for example, "available" indicates that it does not conflict or overlap with transmission of the serving cell.

In the embodiments of this disclosure, for example, in steps 1406 and 1605, the source gNB-DU (first network device DU) includes the information on a candidate cell and the random access configuration of the candidate cell in the DCI to trigger the terminal equipment to initiate a random access procedure on the random access configuration of the candidate cell to obtain a TA value of the candidate cell;
in this case, it may be that the second network device DU (candidate gNB-DU) receives the random access preamble transmitted by the terminal equipment on the candidate cell and determines the TA value of the terminal equipment; and the first network device DU (source gNB-DU) includes a TA value(s) one or more candidate cells in an RAR or cell switch command and transmits the TA value(s) to the terminal equipment.

In the embodiments of this disclosure, the TA value of the candidate cell includes TA value(s) of one or more candidate cells.

Thus, in a case where the source cell and the candidate cell are different gNB-DUs, the source cell is able to obtain the TA value of the candidate cell, thereby providing the TA value of the candidate cell to the terminal equipment.

FIG. 17 is a schematic diagram of a TA value transfer process of embodiment 1 of this disclosure. In FIG. 17, the gNB-CU corresponds to the network device CU, the source gNB-DU corresponds to the first network device DU, and the candidate gNB-DU corresponds to the second network device DU.

As shown in FIG. 17, the transfer process includes:
step 1701: receiving, by the candidate gNB-DU, a random access preamble transmitted by the terminal equipment on a candidate cell;
step 1702: determining a TA value of the terminal equipment by the candidate gNB-DU;
step 1703: indicating the TA value to the gNB-CU by the candidate gNB-DU via the F1 interface, and furthermore, indicating UE information;
step 1704: indicating the TA value to the source gNB-DU by the gNB-CU via the F1 interface, and furthermore, indicating the UE information and/or information in a candidate cell; and
step 1705: including the TA value(s) of the one or more candidate cells in the RAR or the cell switch command and transmitting the TA value(s) to the terminal equipment by the source gNB-DU.

In the embodiments of this disclosure, the candidate cell is a cell with downlink, that is, it is not a UL-only cell;
and/or, the candidate cell is a timing reference of the candidate cell and/or candidate cells in the same TA group.

In the embodiments of this disclosure, the TA value is an absolute timing advance value, such as an initial TA value or a TA updated value;
in this case, for example, the downlink timing reference is the candidate cell or a source cell or another candidate cell in the same TA group or a candidate cell in the same TA group that may be taken as a special cell, the source cell being, for example, a source cell that transmits a PDCCH order.

For example, configuration of the timing reference is transmitted via an RRC message, such as being included in the candidate configuration;
or, configuration of the timing reference is transmitted via MAC signaling, such as an RAR or MSGB or a cell switch command or an MAC CE or a TAC MAC CE;
or, configuration of the timing reference is transmitted via DCI, such as a PDCCH order that triggers a random access procedure.

In the embodiments of this disclosure, the TA value may also be a variable of an absolute timing advance value, such as a TA updated value.

In the embodiments of this disclosure, the timing advance value is used by a terminal equipment to determine uplink advance.

For example, the TA value is used by a terminal equipment to determine the uplink advance according to the absolute timing advance value, or the timing advance value is used by a terminal equipment to determine the uplink advance according to the absolute timing advance value and a variable of the absolute timing advance value.

For example, N_{TA} in the formula in FIG. 1 is the absolute timing advance value, or a sum of the absolute timing advance value and a variable of the absolute timing advance value, and the terminal equipment determines the uplink advance according to N_{TA}.

It can be seen from the above embodiment that by transmitting a first F1 message including information for obtaining uplink synchronization on a candidate cell to a first network device DU by a network device CU of the candidate cell, in the case where the source cell and the candidate cell are different gNB-DUs, the source cell is able to acquire information for obtaining uplink synchronization on the candidate cell, thereby triggering the PDCCH ordered RA on the candidate cell;
furthermore, when the information for obtaining uplink synchronization on the candidate cell includes a TA value, in the case where the source cell and the candidate cell are different gNB-DUs, the source cell is able to acquire the TA value of the candidate cell, thereby providing the TA value of the candidate cell to the terminal equipment, and reducing interruption time of LTM.

### Embodiment 2

The embodiment of this disclosure provides an information transfer method. The method is applicable to a first network device DU, such as the first network device DU in FIG. 6, the base station (BS) in FIG. 7, the TRP1 in FIG. 8, or the candidate DU in FIG. 9. The method described in embodiment 2 corresponds to the method described in embodiment 1, and reference may be made to embodiment 1 for identical or corresponding contents.

FIG. 18 is a schematic diagram of the information transfer method of embodiment 2 of this disclosure. As shown in FIG. 18, the method includes:
step 1801: receiving a first F1 message including information for obtaining uplink synchronization on a candidate cell by a first network device DU from a network device CU of the candidate cell; and
step 1802: transmitting DCI by the first network device DU to a terminal equipment.

In the embodiments of this disclosure, the candidate cell may be replaced with a target candidate cell or a candidate configuration.

In the embodiments of this disclosure, the source cell may be replaced with a serving cell.

In the embodiments of this disclosure, the network device CU of the candidate cell and the network device CU of the serving cell are the same network device CU, such as the same gNB-CU.

In the embodiments of this disclosure, the first network device DU is a source network device DU, such as a source gNB-DU (serving gNB-DU), i.e. a gNB-DU to which the source cell belongs.

In the embodiments of this disclosure, the second network device DU is a candidate network device DU, such as a candidate gNB-DU (target candidate gNB-DU), i.e. a gNB-DU to which the candidate cell belongs.

The first network device DU and the second network device DU belong to the same network device CU.

In the embodiments of this disclosure, the information for obtaining uplink synchronization on the candidate cell includes at least one of random access configuration of the candidate cell, information on the candidate cell and a timing advance (TA) value.

In the embodiments of this disclosure, the method further includes at least one of the following steps:
determining to initiate random access configuration by the first network device DU;
transmitting a request message of the random access configuration of the candidate cell by the first network device DU to the network device CU; and
transmitting a response message of the first F1 message by the first network device DU to the network device CU.

In the embodiments of this disclosure, the DCI includes the random access configuration of the candidate cell and/or the information on the candidate cell.

In the embodiments of this disclosure, the DCI triggers the terminal equipment to initiate a random access procedure on the candidate cell.

In the embodiments of this disclosure, the DCI includes the information on the candidate cell, the information on the candidate cell being used by a terminal equipment to determine the random access configuration of the candidate cell.

In the embodiments of this disclosure, the timing advance value is an absolute timing advance value or a variable of an absolute timing advance value.

In the embodiments of this disclosure, the timing advance value is used by a terminal equipment to determine uplink advance.

In the embodiments of this disclosure, the timing advance value is used by a terminal equipment to determine uplink advance according to the absolute timing advance value, or
the timing advance value is used by a terminal equipment to determine uplink advance according to the absolute timing advance value and a variable of the absolute timing advance value.

In the embodiments of this disclosure, the candidate cell is a cell with downlink; and/or,
the candidate cell is a timing reference of the candidate cell and/or candidate cells in the same TA group.

In the embodiments of this disclosure, the downlink timing reference is the candidate cell or a source cell or another candidate cell in the same TA group or a candidate cell in the same TA group that may be taken as a special cell.

In the embodiments of this disclosure, configuration of the timing reference is transmitted via an RRC message or MAC signaling or DCI.

In the embodiments of this disclosure, the method further includes:
step 1803: transmitting the timing advance value of the candidate cell by the first network device DU to the terminal equipment via a random access response (RAR) or a cell switch command.

In the embodiments of this disclosure, step 1803 is optional.

In the embodiments of this disclosure, reference may be made to relevant contents in embodiment 1, such as the contents in FIG. 14 and FIG. 16, for specific contents of steps 1801-1803.

In the embodiments of this disclosure, the timing advance value of the candidate cell includes TA value(s) of one or more candidate cells.

It can be seen from the above embodiment that by transmitting a first F1 message including information for obtaining uplink synchronization on a candidate cell to a first network device DU by a network device CU of the candidate cell, in the case where the source cell and the candidate cell are different gNB-DUs, the source cell is able to acquire information for obtaining uplink synchronization on the candidate cell, thereby triggering the PDCCH ordered RA on the candidate cell;
furthermore, when the information for obtaining uplink synchronization on the candidate cell includes a TA value, in the case where the source cell and the candidate cell are different gNB-DUs, the source cell is able to acquire the TA value of the candidate cell, thereby providing the TA value of the candidate cell to the terminal equipment, and reducing interruption time of LTM.

### Embodiment 3

The embodiment of this disclosure provides an information transfer method. The method is applicable to a terminal equipment, such as the terminal equipment 102 in FIG. 6 or FIG. 8, the UE in FIG. 7, or the terminal in FIG. 9. The method described in embodiment 3 corresponds to the method described in embodiment 1, and reference may be made to embodiment 1 for identical or corresponding contents.

FIG. 19 is a schematic diagram of the information transfer method of embodiment 3 of this disclosure, the method being applicable to a terminal equipment. As shown in FIG. 19, the method includes:
step 1901: receiving DCI by a terminal equipment from a first network device DU, the DCI including random access configuration of a candidate cell and/or information on the candidate cell.

In the embodiments of this disclosure, the DCI includes the random access configuration of candidate cells and information about candidate cells. In this case, as shown in FIG. 19, the method may further include:
step 1902: initiating a random access procedure on the candidate cell by the terminal equipment according to the information on the candidate cell and the random access configuration of the candidate cell, to obtain a timing advance (TA) value of the candidate cell.

In the embodiments of this disclosure, the DCI includes the information on the candidate cell but does not include random access configuration of the candidate cell. In this case, as shown in FIG. 19, the method may further include:
step 1903: determining the random access configuration of the candidate cell by the terminal equipment according to the information on the candidate cell.

In the embodiments of this disclosure, the random access configuration determined by the first determining unit according to the information on the candidate cell includes at least one of the following:
random access configuration included in candidate cell configuration;
random access configuration for obtaining timing advance included in candidate cell configuration;
random access configuration appearing first in candidate cell configuration;
random access configuration appearing first in candidate cell configuration and used for obtaining timing advance;
random access configuration included in candidate cell configuration, an a L1 measurement result of a corresponding downlink reference signal of the random access configuration being better than a configured threshold; and
next available random access included in candidate cell configuration after DCI is received.

In the embodiments of this disclosure, step 1903 is optional, and is represented by a frame in dotted lines.

Furthermore, after the random access configuration of the candidate cell is determined in step 1903, step 1902 may be executed, that is, initiating a random access procedure on the candidate cell.

In the embodiments of this disclosure, the timing advance value is an absolute timing advance value or a variable of an absolute timing advance value.

In the embodiments of this disclosure, as shown in FIG. 19, the method may further include:
step 1904: receiving a random access response (RAR) or a cell switch command by the terminal equipment from the first network device DU, the random access response or cell switch command including the timing advance value of the candidate cell.

In the embodiments of this disclosure, the timing advance value of the candidate cell includes TA value(s) of one or more candidate cells.

In the embodiments of this disclosure, as shown in FIG. 19, the method may further include:
step 1905: determining uplink advance by the terminal equipment according to the timing advance value.

In the embodiments of this disclosure, the determining uplink advance by the terminal equipment according to the timing advance value includes: determining the uplink advance by the terminal equipment according to an absolute timing advance value, or, determining the uplink advance by the terminal equipment according to an absolute timing advance value and a variable of the absolute timing advance value.

In the embodiments of this disclosure, the candidate cell is a cell with a downlink; and/or
the candidate cell is a timing reference of the candidate cell and/or a candidate cell in a same TA group.

In the embodiments of this disclosure, a downlink timing reference is the candidate cell or a source cell or another candidate cell in a same TA group or a candidate cell in a same TA group that is able to be taken as a special cell.

In the embodiments of this disclosure, configuration of the timing reference is transmitted via an RRC message or MAC signaling or DCI.

In the embodiments of this disclosure, steps 1902-1905 are optional .

In the embodiments of this disclosure, reference may be made to relevant contents in embodiment 1 for implementations of steps 1901-1905, which shall not be repeated herein any further.

It can be seen from the above embodiment that by transmitting a first F1 message including information for obtaining uplink synchronization on a candidate cell to a first network device DU by a network device CU of the candidate cell, in the case where the source cell and the candidate cell are different gNB-DUs, the source cell is able to acquire information for obtaining uplink synchronization on the candidate cell, thereby triggering the PDCCH ordered RA on the candidate cell;

furthermore, when the information for obtaining uplink synchronization on the candidate cell includes a TA value, in the case where the source cell and the candidate cell are different gNB-DUs, the source cell is able to acquire the TA value of the candidate cell, thereby providing the TA value of the candidate cell to the terminal equipment, and reducing interruption time of LTM.

### Embodiment 4

The embodiment of this disclosure provides an information transfer apparatus, configured in a network device DU. As a principle of the apparatus for solving problems is similar to that of the method in embodiment 1, reference may be made to the implementation of the method described in embodiment 1 for implementation of the apparatus, with identical contents being not going to be described herein any further.

FIG. 20 is a schematic diagram of the information transfer apparatus of embodiment 4 of this disclosure. As shown in FIG. 20, an apparatus 2000 includes:
a first transmitting unit 2001 configured to transmit a first F1 message including information for obtaining uplink synchronization on a candidate cell to a first network device DU by a network device CU of the candidate cell.

In the embodiments of this disclosure, the information for obtaining uplink synchronization on the candidate cell includes at least one of random access configuration of the candidate cell, information on the candidate cell and a timing advance (TA) value.

In the embodiments of this disclosure, the random access configuration includes at least one piece of the following information:
information on time-frequency resources of random access, such as a PRACH MASK index;
random access preamble information, such as an RA preamble index; and
downlink reference signal (DL RS) information, such as an SSB index, and a CSI-RS resource ID.

In the embodiments of this disclosure, as shown in FIG. 20, the apparatus 2000 further includes at least one of the following units:
a second transmitting unit 2002 configured to transmit a message indicating one or more candidate cells by the network device CU to a second network device DU to request random access configuration of the indicated candidate cell;
a first receiving unit 2003 configured to receive the random access configuration of the candidate cell by the network device CU from the second network device DU; and
a second receiving unit 2004 configured to receive a response message of the first F1 message by the network device CU from the first network device DU.

In the embodiments of this disclosure, as shown in FIG. 20, the apparatus 2000 further includes at least one of the following units:
a third receiving unit 2005 configured to receive a request message of the random access configuration of the candidate cell by the network device CU from the first network device DU; or
a first determining unit 2006 configured to determine to initiate random access configuration by the network device CU.

In the embodiments of this disclosure, the random access configuration includes one random access configuration, or
the random access configuration includes multiple random access configurations and corresponding candidate cell information.

In the embodiments of this disclosure, the information for obtaining uplink synchronization on the candidate cell includes information on the candidate cell includes that the information on a candidate cell is used by a terminal equipment to determine random access configuration of the candidate cell.

In the embodiments of this disclosure, the timing advance value is an absolute timing advance value or a variable of an absolute timing advance value.

In the embodiments of this disclosure, the timing advance value is used by a terminal equipment to determine uplink advance.

In the embodiments of this disclosure, the timing advance value is used by a terminal equipment to determine uplink advance according to the absolute timing advance value, or
the timing advance value is used by a terminal equipment to determine uplink advance according to the absolute timing advance value and a variable of the absolute timing advance value.

In the embodiments of this disclosure, the candidate cell is a cell with downlink; and/or,
the candidate cell is a timing reference of the candidate cell and/or candidate cells in the same TA group.

In the embodiments of this disclosure, the downlink timing reference is the candidate cell or a source cell or another candidate cell in the same TA group or a candidate cell in the same TA group that may be taken as a special cell.

In the embodiments of this disclosure, configuration of the timing reference is transmitted via an RRC message or MAC signaling or DCI.

In the embodiments of this disclosure, as shown in FIG. 20, the apparatus 2000 further includes:
a fourth receiving unit 2007 configured to receive a timing advance value of the candidate cell from a second network device DU.

Or, the first receiving unit 2003 may be reused to receive a timing advance value of the candidate cell from a second network device DU.

In addition, the fourth receiving unit 2007 or the reused first receiving unit 2003 may be connected to other unit to perform transmission and/or processing related to timing advance.

In the embodiments of this disclosure, the timing advance value of the candidate cell includes TA value(s) of one or more candidate cells.

In the embodiments of this disclosure, the units 2002-2007 are optional.

In the embodiments of this disclosure, reference may be made to relevant steps in embodiment 1 for implementations of the above units, which shall not be repeated herein any further.

It can be seen from the above embodiment that by transmitting a first F1 message including information for obtaining uplink synchronization on a candidate cell to a first network device DU by a network device CU of the candidate cell, in the case where the source cell and the candidate cell are different gNB-DUs, the source cell is able to acquire information for obtaining uplink synchronization on the candidate cell, thereby triggering the PDCCH ordered RA on the candidate cell;
furthermore, when the information for obtaining uplink synchronization on the candidate cell includes a TA value, in the case where the source cell and the candidate cell are different gNB-DUs, the source cell is able to acquire the TA value of the candidate cell, thereby providing the TA value of the candidate cell to the terminal equipment, and reducing interruption time of LTM.

### Embodiment 5

The embodiment of this disclosure provides an information transfer apparatus, configured in a first network device DU. As a principle of the apparatus for solving problems is similar to that of the method in embodiment 2, reference may be made to the implementation of the method described in embodiment 2 for implementation of the apparatus, with identical contents being not going to be described herein any further.

FIG. 21 is a schematic diagram of the information transfer apparatus of embodiment 5 of this disclosure. As shown in FIG. 21, an apparatus 2100 includes:
a fifth receiving unit 2101 configured to receive a first F1 message including information for obtaining uplink synchronization on a candidate cell by a first network device DU from a network device CU of the candidate cell; and
a third transmitting unit 2102 configured to transmit DCI by the first network device DU to a terminal equipment.

In the embodiments of this disclosure, the information for obtaining uplink synchronization on the candidate cell includes at least one of random access configuration of the candidate cell, information on the candidate cell and a timing advance (TA) value.

In the embodiments of this disclosure, as shown in FIG. 21, the apparatus 2100 further includes at least one of the following units:
a second determining unit 2103 configured to determine to initiate random access configuration by the first network device DU;
a fourth transmitting unit 2104 configured to transmit a request message of the random access configuration of the candidate cell by the first network device DU to the network device CU; and
a fifth transmitting unit 2105 configured to transmit a response message of the first F1 message by the first network device DU to the network device CU.

In the embodiments of this disclosure, the DCI includes the random access configuration of the candidate cell and/or the information on the candidate cell.

In the embodiments of this disclosure, the DCI triggers the terminal equipment to initiate a random access procedure on the candidate cell.

In the embodiments of this disclosure, the DCI includes the information on the candidate cell,
the information on the candidate cell being used by a terminal equipment to determine the random access configuration of the candidate cell.

In the embodiments of this disclosure, the timing advance value is an absolute timing advance value or a variable of an absolute timing advance value.

In the embodiments of this disclosure, the timing advance value is used by a terminal equipment to determine uplink advance.

In the embodiments of this disclosure, the timing advance value is used by a terminal equipment to determine uplink advance according to the absolute timing advance value, or
the timing advance value is used by a terminal equipment to determine uplink advance according to the absolute timing advance value and a variable of the absolute timing advance value.

In the embodiments of this disclosure, the candidate cell is a cell with downlink; and/or,
the candidate cell is a timing reference of the candidate cell and/or candidate cells in the same TA group.

In the embodiments of this disclosure, the downlink timing reference is the candidate cell or a source cell or another candidate cell in the same TA group or a candidate cell in the same TA group that may be taken as a special cell.

In the embodiments of this disclosure, configuration of the timing reference is transmitted via an RRC message or MAC signaling or DCI.

In the embodiments of this disclosure, as shown in FIG. 21, the apparatus 2100 further includes:
a sixth transmitting unit 2106 configured to transmit the timing advance value of the candidate cell to the terminal equipment via a random access response (RAR) or a cell switch command.

In the embodiments of this disclosure, the timing advance value of the candidate cell includes TA value(s) of one or more candidate cells.

In the embodiments of this disclosure, the units 2103-2106 are optional.

In the embodiments of this disclosure, reference may be made to relevant steps in embodiment 1 and embodiment 2 for implementations of the above units, which shall not be repeated herein any further.

It can be seen from the above embodiment that by transmitting a first F1 message including information for obtaining uplink synchronization on a candidate cell to a first network device DU by a network device CU of the candidate cell, in the case where the source cell and the candidate cell are different gNB-DUs, the source cell is able to acquire information for obtaining uplink synchronization on the candidate cell, thereby triggering the PDCCH ordered RA on the candidate cell;
furthermore, when the information for obtaining uplink synchronization on the candidate cell includes a TA value, in the case where the source cell and the candidate cell are different gNB-DUs, the source cell is able to acquire the TA value of the candidate cell, thereby providing the TA value of the candidate cell to the terminal equipment, and reducing interruption time of LTM.

### Embodiment 6

The embodiment of this disclosure provides an information transfer apparatus, configured in a terminal equipment. As a principle of the apparatus for solving problems is similar to that of the method in embodiment 3, reference may be made to the implementation of the method described in embodiment 3 for implementation of the apparatus, with identical contents being not going to be described herein any further.

FIG. 22 is a schematic diagram of the information transfer apparatus of embodiment 6 of this disclosure. As shown in FIG. 22, an apparatus 2200 includes:
a sixth receiving unit 2201 configured to receive DCI from a first network device DU, the DCI including random access configuration of a candidate cell and/or information on the candidate cell.

In the embodiments of this disclosure, as shown in FIG. 22, the apparatus 2200 further includes:
a first initiating unit 2202 configured to initiate a random access procedure on the candidate cell according to the information on the candidate cell and the random access configuration of the candidate cell, to obtain a timing advance (TA) value of the candidate cell.

In the embodiments of this disclosure, as shown in FIG. 22, the apparatus 2200 further includes:
a first determining unit 2203 configured to determine the random access configuration of the candidate cell according to the information on the candidate cell.

In the embodiments of this disclosure, the first determining unit 2203 determines at least one of the following according to the information on the candidate cell:
random access configuration included in candidate cell configuration;
random access configuration for obtaining timing advance included in candidate cell configuration;
random access configuration appearing first in candidate cell configuration;
random access configuration appearing first in candidate cell configuration and used for obtaining timing advance;
random access configuration included in candidate cell configuration, an a L1 measurement result of a corresponding downlink reference signal of the random access configuration being better than a configured threshold; and
next available random access included in candidate cell configuration after DCI is received.

In the embodiments of this disclosure, the first determining unit 2203 is optional, and is represented by a frame in dotted lines in FIG. 22.

In the embodiments of this disclosure, the timing advance value is an absolute timing advance value or a variable of an absolute timing advance value.

In the embodiments of this disclosure, as shown in FIG. 22, the apparatus 2200 further includes:
a seventh receiving unit 2204 configured to receive a random access response (RAR) or a cell switch command from the first network device DU, the random access response or cell switch command including the timing advance value of the candidate cell.

In the embodiments of this disclosure, the timing advance value of the candidate cell includes TA value(s) of one or more candidate cells.

In the embodiments of this disclosure, as shown in FIG. 22, the apparatus 2200 further includes:
a second determining unit 2205 configured to determine uplink advance according to the timing advance value.

In the embodiments of this disclosure, that the second determining unit 2205 determines the uplink advance according to the timing advance value includes:
that the second determining unit 2205 determines the uplink advance according to an absolute timing advance value, or
the second determining unit 2205 determines the uplink advance according to an absolute timing advance value and a variable of the absolute timing advance value.

In the embodiments of this disclosure, the candidate cell is a cell with a downlink; and/or
the candidate cell is a timing reference of the candidate cell and/or a candidate cell in a same TA group.

In the embodiments of this disclosure, a downlink timing reference is the candidate cell or a source cell or another candidate cell in a same TA group or a candidate cell in a same TA group that is able to be taken as a special cell.

In the embodiments of this disclosure, configuration of the timing reference is transmitted via an RRC message or MAC signaling or DCI.

It can be seen from the above embodiment that by transmitting a first F1 message including information for obtaining uplink synchronization on a candidate cell to a first network device DU by a network device CU of the candidate cell, in the case where the source cell and the candidate cell are different gNB-DUs, the source cell is able to acquire information for obtaining uplink synchronization on the candidate cell, thereby triggering the PDCCH ordered RA on the candidate cell;
furthermore, when the information for obtaining uplink synchronization on the candidate cell includes a TA value, in the case where the source cell and the candidate cell are different gNB-DUs, the source cell is able to acquire the TA value of the candidate cell, thereby providing the TA value of the candidate cell to the terminal equipment, and reducing interruption time of LTM.

### Embodiment 7

The embodiment of this disclosure provides a network device, including the information transfer apparatus(es) described in embodiment 4 and/or embodiment 5.

For example, the information transfer apparatus described in embodiment 4 is provided in a gNB-CU of a candidate cell, and the information transfer apparatus described in embodiment 5 is provided in a source gNB-DU. The embodiment of this disclosure is related to LTM within the gNB-CU, that is, the gNB-CU of the candidate cell is also a gNB-CU of the source cell.

The network device (e.g. gNB) includes the information transfer apparatus described in embodiment 4 (e.g. the gNB-CU of the candidate cell/source cell), or, the network device (e.g. a gNB) includes the information transfer apparatus described in embodiment 5 (e.g. a source gNB-DU), or, the network device (e.g. a gNB) includes the information transfer apparatus described in embodiment 4 (e.g. the gNB-CU of the candidate cell/source cell) and the information transfer apparatus described in embodiment 5 (e.g. the source gNB-DU).

FIG. 23 is a schematic diagram of a systematic structure of the network device of embodiment 7 of this disclosure. As shown in FIG. 23, a network device 2300 may include a processor 2310 and a memory 2320, the memory 2320 being coupled to the processor 2310. Wherein, the memory 2320 may store various data, and furthermore, it may store a program 2330 for data processing, and execute the program 2330 under control of the processor 2310 to receive various information transmitted by a terminal equipment, and transmit various information to the terminal equipment.

In one implementation, the functions of the information transfer apparatus may be integrated into the processor 2310.

Corresponding to embodiment 4, the processor 2310 may be configured to: transmit a first F1 message including information for obtaining uplink synchronization on a candidate cell to a first network device DU.

Corresponding to embodiment 5, the processor 2310 may be configured to: receive a first F1 message including information for obtaining uplink synchronization on a candidate cell from a network device CU of the candidate cell; and transmit DCI to a terminal equipment.

In another implementation, the information transfer apparatus and the processor 2310 may be configured separately; for example, the information transfer apparatus may be configured as a chip connected to the processor 2310, and the functions of the information transfer apparatus are executed under control of the processor 2310.

Furthermore, as shown in FIG. 23, the network device 2300 may include a transceiver 2340, and an antenna 2350, etc. Wherein, functions of the above components are similar to those in the related art, and shall not be described herein any further. It should be noted that the network device 2300 does not necessarily include all the parts shown in FIG. 23. Furthermore, the network device 2300 may include parts not shown in FIG. 23, and the related art may be referred to.

It can be seen from the above embodiment that by transmitting a first F1 message including information for obtaining uplink synchronization on a candidate cell to a first network device DU by a network device CU of the candidate cell, in the case where the source cell and the candidate cell are different gNB-DUs, the source cell is able to acquire information for obtaining uplink synchronization on the candidate cell, thereby triggering the PDCCH ordered RA on the candidate cell;
furthermore, when the information for obtaining uplink synchronization on the candidate cell includes a TA value, in the case where the source cell and the candidate cell are different gNB-DUs, the source cell is able to acquire the TA value of the candidate cell, thereby providing the TA value of the candidate cell to the terminal equipment, and reducing interruption time of LTM.

### Embodiment 8

The embodiment of this disclosure provides a terminal equipment, including the information transfer apparatus described in embodiment 6.

FIG. 24 is a schematic diagram of the terminal equipment of the embodiment of this disclosure. As shown in FIG. 24, a terminal equipment 2400 may include a processor 2410 and a memory 2420, the memory 2420 storing data and a program, and being coupled to the processor 2410. It should be noted that this figure is illustrative only, and other types of structures may also be used to supplement or replace this structure and achieve a telecommunications function or other functions.

In one implementation, the functions of the information transfer apparatus may be integrated into the processor 2410.

In the embodiments of this disclosure, the processor 2401 may be configured to: receive DCI from a first network device DU, the DCI including random access configuration of a candidate cell and/or information on the candidate cell.

In another implementation, the information transfer apparatus and the processor 2410 may be configured separately; for example, the information transfer apparatus may be configured as a chip connected to the processor 2410, and the functions of the information transfer apparatus are executed under control of the processor 2410.

As shown in FIG. 24, the terminal equipment 2400 may further include a communication module 2430, an input unit 2440, a display 2450, and a power supply 2460. It should be noted that the terminal equipment 2400 does not necessarily include all the parts shown in FIG. 24, and the above components are not necessary. Furthermore, the terminal equipment 2400 may include parts not shown in FIG. 24, and the related art may be referred to.

As shown in FIG. 24, the processor 2410 is sometimes referred to as a controller or an operational control, which may include a microprocessor or other processor devices and/or logic devices. The processor 2410 receives input and controls operations of components of the terminal equipment 2400.

Wherein, the memory 2420 may be, for example, one or more of a buffer memory, a flash memory, a hard drive, a mobile medium, a volatile memory, a nonvolatile memory, or other suitable devices, which may store various data, etc., and furthermore, store programs executing related information. And the processor 2410 may execute programs stored in the memory 2420 to realize information storage or processing, etc. Functions of other parts are similar to those of the related art, which shall not be described herein any further.

It can be seen from the above embodiment that by transmitting a first F1 message including information for obtaining uplink synchronization on a candidate cell to a first network device DU by a network device CU of the candidate cell, in the case where the source cell and the candidate cell are different gNB-DUs, the source cell is able to acquire information for obtaining uplink synchronization on the candidate cell, thereby triggering the PDCCH ordered RA on the candidate cell;
furthermore, when the information for obtaining uplink synchronization on the candidate cell includes a TA value, in the case where the source cell and the candidate cell are different gNB-DUs, the source cell is able to acquire the TA value of the candidate cell, thereby providing the TA value of the candidate cell to the terminal equipment, and reducing interruption time of LTM.

### Embodiment 9

The embodiment of this disclosure provides a communication system, including the network device described in embodiment 8 and/or the terminal equipment described in embodiment 7, and reference may be made to embodiment 8 and embodiment 7 for specific contents.

For example, reference may be made to FIG. 6 for a structure of the communication system. As shown in FIG. 6, the communication system 100 includes the network device 101 and the terminal equipment 102. The terminal equipment 102 may be identical to the terminal equipment described in embodiment 8, and/or, the network device 101 may be identical to the network device described in embodiment 7, with repeated parts being not going to be described herein any further.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 20 may either correspond to software modules of procedures of a computer program, or correspond to hardware modules. Such software modules may respectively correspond to the steps shown in FIGs. 12, 13 and 15. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 20 may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 20 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the principle of this disclosure, and such variants and modifications fall within the scope of this disclosure.

As to the implementations including the above embodiments, following supplements are further disclosed.

### Supplements (I)

1. An information transfer apparatus, including:
   a first transmitting unit configured to transmit a first F1 message including information for obtaining uplink synchronization on a candidate cell to a first network device DU by a network device CU of the candidate cell.
2. The apparatus according to supplement 1, wherein,
   the information for obtaining uplink synchronization on the candidate cell includes at least one of random access configuration of the candidate cell, information on the candidate cell and a timing advance (TA) value.
3. The apparatus according to supplement 2, wherein,
   the random access configuration includes at least one piece of the following information:
   information on time-frequency resources of random access;
   random access preamble information; and
   downlink reference signal (DL RS) information.
4. The apparatus according to supplement 2 or 3, wherein the apparatus further includes at least one of the following units:
   a second transmitting unit configured to transmit a message indicating one or more candidate cells by the network device CU to a second network device DU to request random access configuration of the indicated candidate cell;
   a first receiving unit configured to receive the random access configuration of the candidate cell by the network device CU from the second network device DU; and
   a second receiving unit configured to receive a response message of the first F1 message by the network device CU from the first network device DU.
5. The apparatus according to any one of supplements 2-4, wherein the apparatus further includes at least one of the following units:
   a third receiving unit configured to receive a request message of the random access configuration of the candidate cell by the network device CU from the first network device DU; or
   a first determining unit configured to determine to initiate random access configuration by the network device CU.
6. The apparatus according to any one of supplements 2-4, wherein,
   the random access configuration includes one random access configuration, or
   the random access configuration includes multiple random access configurations and corresponding candidate cell information.
7. The apparatus according to supplement 2, wherein that the information for obtaining uplink synchronization on the candidate cell includes information on the candidate cell includes that:
   the information on the candidate cell is used by a terminal equipment to determine random access configuration of the candidate cell.
8. The apparatus according to supplement 2, wherein,
   the timing advance value is an absolute timing advance value or a variable of an absolute timing advance value.
9. The apparatus according to supplement 2 or 8, wherein,
   the timing advance value is used by a terminal equipment to determine uplink advance.
10. The apparatus according to supplement 9, wherein,
   the timing advance value is used by the terminal equipment to determine uplink advance according to the absolute timing advance value, or
   the timing advance value is used by the terminal equipment to determine uplink advance according to the absolute timing advance value and a variable of the absolute timing advance value.
11. The apparatus according to any one of supplements 2 and 8-10, wherein,
   the candidate cell is a cell with downlink; and/or,
   the candidate cell is a timing reference of the candidate cell and/or candidate cells in the same TA group.
12. The apparatus according to any one of supplements 2 and 8-11, wherein,
   the downlink timing reference is the candidate cell or a source cell or another candidate cell in the same TA group or a candidate cell in the same TA group that may be taken as a special cell.
13. The apparatus according to any one of supplements 2 and 8-12, wherein,
   configuration of the timing reference is transmitted via an RRC message or MAC signaling or DCI.
14. The apparatus according to any one of supplements 2 and 8-13, wherein the apparatus further includes:
   a fourth receiving unit configured to receive a timing advance value of the candidate cell from a second network device DU.
15. The apparatus according to any one of supplements 2 and 8-14, wherein,
   the timing advance value of the candidate cell includes TA value(s) of one or more candidate cells.
16. An information transfer apparatus, including:
   a fifth receiving unit configured to receive a first F1 message including information for obtaining uplink synchronization on a candidate cell by a first network device DU from a network device CU of the candidate cell; and
   a third transmitting unit configured to transmit DCI by the first network device DU to a terminal equipment.
17. The apparatus according to supplement 16, wherein,
   the information for obtaining uplink synchronization on the candidate cell includes at least one of random access configuration of the candidate cell, information on the candidate cell and a timing advance (TA) value.
18. The apparatus according to supplement 17, wherein the apparatus further includes at least one of the following units:
   a second determining unit configured to determine to initiate random access configuration by the first network device DU;
   a third transmitting unit configured to transmit a request message of the random access configuration of the candidate cell by the first network device DU to the network device CU; and
   a fourth transmitting unit configured to transmit a response message of the first F1 message by the first network device DU to the network device CU.
19. The apparatus according to any one of supplements 16-18, wherein,
   the DCI includes the random access configuration of the candidate cell and/or the information on the candidate cell.
20. The apparatus according to supplement 19, wherein,
   the DCI triggers the terminal equipment to initiate a random access procedure on the candidate cell.
21. The apparatus according to supplement 19, wherein that the DCI includes the information on the candidate cell includes that:
   the information on the candidate cell is used by the terminal equipment to determine the random access configuration of the candidate cell.
22. The apparatus according to supplement 17, wherein,
   the timing advance value is an absolute timing advance value or a variable of an absolute timing advance value.
23. The apparatus according to supplement 17 or 22, wherein,
   the timing advance value is used by the terminal equipment to determine uplink advance.
24. The apparatus according to supplement 23, wherein,
   the timing advance value is used by the terminal equipment to determine uplink advance according to the absolute timing advance value, or
   the timing advance value is used by the terminal equipment to determine uplink advance according to the absolute timing advance value and a variable of the absolute timing advance value.
25. The apparatus according to any one of supplement 17 and 22-24, wherein,
   the candidate cell is a cell with downlink; and/or,
   the candidate cell is a timing reference of the candidate cell and/or candidate cells in the same TA group.
26. The apparatus according to any one of supplement 17 and 22-25, wherein,
   the downlink timing reference is the candidate cell or a source cell or another candidate cell in the same TA group or a candidate cell in the same TA group that may be taken as a special cell.
27. The apparatus according to any one of supplement 17 and 22-26, wherein,
   configuration of the timing reference is transmitted via an RRC message or MAC signaling or DCI.
28. The apparatus according to any one of supplement 16, 17 and 22-27, wherein the apparatus further includes:
   a fifth transmitting unit configured to transmit the timing advance value of the candidate cell to the terminal equipment via a random access response (RAR) or a cell switch command.
29. The apparatus according to any one of supplement 16, 17 and 22-28, wherein,
   the timing advance value of the candidate cell includes timing advance value(s) of one or more candidate cells.
30. An information transfer apparatus, configured in a terminal equipment, the apparatus including:
   a sixth receiving unit configured to receive DCI from a first network device DU, the DCI including random access configuration of a candidate cell and/or information on the candidate cell.
31. The apparatus according to supplement 30, wherein the apparatus further includes:
   a first initiating unit configured to initiate a random access procedure on the candidate cell according to the information on the candidate cell and the random access configuration of the candidate cell, to obtain a timing advance (TA) value of the candidate cell.
32. The apparatus according to supplement 30, wherein the apparatus further includes:
   a first determining unit configured to determine the random access configuration of the candidate cell according to the information on the candidate cell.
33. The apparatus according to supplement 32, wherein the first determining unit determines at least one of the following according to the information on the candidate cell:
   random access configuration included in candidate cell configuration;
   random access configuration for obtaining timing advance included in candidate cell configuration;
   random access configuration appearing first in candidate cell configuration;
   random access configuration appearing first in candidate cell configuration and used for obtaining timing advance;
   random access configuration included in candidate cell configuration, an a L1 measurement result of a corresponding downlink reference signal of the random access configuration being better than a configured threshold; and
   next available random access included in candidate cell configuration after DCI is received.
34. The apparatus according to supplement 31, wherein,
   the timing advance value is an absolute timing advance value or a variable of an absolute timing advance value.
35. The apparatus according to supplement 31 or 34, wherein the apparatus further includes:
   a second determining unit configured to determine uplink advance according to the timing advance value.
36. The apparatus according to supplement 35, wherein that the second determining unit determines the uplink advance according to the timing advance value includes:
   that the second determining unit determines the uplink advance according to an absolute timing advance value, or
   the second determining unit determines the uplink advance according to an absolute timing advance value and a variable of the absolute timing advance value.
37. The apparatus according to any one of supplement 31 and 34-36, wherein,
   the candidate cell is a cell with a downlink; and/or
   the candidate cell is a timing reference of the candidate cell and/or a candidate cell in a same TA group.
38. The apparatus according to any one of supplement 31 and 34-37, wherein,
   a downlink timing reference is the candidate cell or a source cell or another candidate cell in a same TA group or a candidate cell in a same TA group that is able to be taken as a special cell.
39. The apparatus according to any one of supplement 31 and 34-38, wherein,
   configuration of the timing reference is transmitted via an RRC message or MAC signaling or DCI.
40. The apparatus according to any one of supplement 31 and 34-39, wherein the apparatus further includes:
   a seventh receiving unit configured to receive a random access response (RAR) or a cell switch command from the first network device DU, the random access response or cell switch command including the timing advance value of the candidate cell.
41. The apparatus according to any one of supplement 31 and 34-40, wherein,
   the timing advance value of the candidate cell includes TA value(s) of one or more candidate cells.
42. A network device, including the apparatus as described in any one of supplements 1-29.
43. A terminal equipment, including the apparatus as described in any one of supplements 30-41.
44. A communication system, including the network device as described in supplement 42 and/or the terminal equipment as described in supplement 43.

### Supplements (II)

1. An information transfer method, including:
   transmitting a first F1 message including information for obtaining uplink synchronization on a candidate cell to a first network device DU by a network device CU of the candidate cell.
2. The method according to supplement 1, wherein,
   the information for obtaining uplink synchronization on the candidate cell includes at least one of random access configuration of the candidate cell, information on the candidate cell and a timing advance (TA) value.
3. The method according to supplement 2, wherein,
   the random access configuration includes at least one piece of the following information:
   information on time-frequency resources of random access;
   random access preamble information; and
   downlink reference signal (DL RS) information.
4. The method according to supplement 2 or 3, wherein the method further includes at least one of the following steps:
   transmitting a message indicating one or more candidate cells by the network device CU to a second network device DU to request random access configuration of the indicated candidate cell;
   receiving the random access configuration of the candidate cell by the network device CU from the second network device DU; and
   receiving a response message of the first F1 message by the network device CU from the first network device DU.
5. The method according to any one of supplements 2-4, wherein the method further includes at least one of the following steps:
   receiving a request message of the random access configuration of the candidate cell by the network device CU from the first network device DU; or
   determining to initiate random access configuration by the network device CU.
6. The method according to any one of supplements 2-4, wherein,
   the random access configuration includes one random access configuration, or
   the random access configuration includes multiple random access configurations and corresponding candidate cell information.
7. The method according to supplement 2, wherein that the information for obtaining uplink synchronization on the candidate cell includes information on the candidate cell includes that:
   the information on the candidate cell is used by a terminal equipment to determine random access configuration of the candidate cell.
8. The method according to supplement 2, wherein,
   the timing advance value is an absolute timing advance value or a variable of an absolute timing advance value.
9. The method according to supplement 2 or 8, wherein,
   the timing advance value is used by a terminal equipment to determine uplink advance.
10. The method according to supplement 9, wherein,
   the timing advance value is used by the terminal equipment to determine uplink advance according to the absolute timing advance value, or
   the timing advance value is used by the terminal equipment to determine uplink advance according to the absolute timing advance value and a variable of the absolute timing advance value.
11. The method according to any one of supplements 2 and 8-10, wherein,
   the candidate cell is a cell with downlink; and/or,
   the candidate cell is a timing reference of the candidate cell and/or candidate cells in the same TA group.
12. The method according to any one of supplements 2 and 8-11, wherein,
   the downlink timing reference is the candidate cell or a source cell or another candidate cell in the same TA group or a candidate cell in the same TA group that may be taken as a special cell.
13. The method according to any one of supplements 2 and 8-12, wherein,
   configuration of the timing reference is transmitted via an RRC message or MAC signaling or DCI.
14. The method according to any one of supplements 2 and 8-13, wherein the method further includes:
   receiving a timing advance value of the candidate cell by the network device CU from a second network device DU.
15. The method according to any one of supplements 2 and 8-14, wherein,
   the timing advance value of the candidate cell includes TA value(s) of one or more candidate cells.
16. An information transfer method, including:
   receiving a first F1 message including information for obtaining uplink synchronization on a candidate cell by a first network device DU from a network device CU of the candidate cell; and
   transmitting DCI by the first network device DU to a terminal equipment.
17. The method according to supplement 16, wherein,
   the information for obtaining uplink synchronization on the candidate cell includes at least one of random access configuration of the candidate cell, information on the candidate cell and a timing advance (TA) value.
18. The method according to supplement 17, wherein the method further includes at least one of the following steps:
   determining to initiate random access configuration by the first network device DU;
   transmitting a request message of the random access configuration of the candidate cell by the first network device DU to the network device CU; and
   transmitting a response message of the first F1 message by the first network device DU to the network device CU.
19. The method according to any one of supplements 16-18, wherein,
   the DCI includes the random access configuration of the candidate cell and/or the information on the candidate cell.
20. The method according to supplement 19, wherein,
   the DCI triggers the terminal equipment to initiate a random access procedure on the candidate cell.
21. The method according to supplement 19, wherein that the DCI includes the information on the candidate cell includes that:
   the information on the candidate cell is used by the terminal equipment to determine the random access configuration of the candidate cell.
22. The method according to supplement 17, wherein,
   the timing advance value is an absolute timing advance value or a variable of an absolute timing advance value.
23. The method according to supplement 17 or 22, wherein,
   the timing advance value is used by the terminal equipment to determine uplink advance.
24. The method according to supplement 23, wherein,
   the timing advance value is used by the terminal equipment to determine uplink advance according to the absolute timing advance value, or
   the timing advance value is used by the terminal equipment to determine uplink advance according to the absolute timing advance value and a variable of the absolute timing advance value.
25. The method according to any one of supplement 17 and 22-24, wherein,
   the candidate cell is a cell with downlink; and/or,
   the candidate cell is a timing reference of the candidate cell and/or candidate cells in the same TA group.
26. The method according to any one of supplement 17 and 22-25, wherein,
   the downlink timing reference is the candidate cell or a source cell or another candidate cell in the same TA group or a candidate cell in the same TA group that may be taken as a special cell.
27. The method according to any one of supplement 17 and 22-26, wherein,
   configuration of the timing reference is transmitted via an RRC message or MAC signaling or DCI.
28. The method according to any one of supplement 16, 17 and 22-27, wherein the method further includes:
   transmitting the timing advance value of the candidate cell by the first network device DU to the terminal equipment via a random access response (RAR) or a cell switch command.
29. The method according to any one of supplement 16, 17 and 22-28, wherein,
   the timing advance value of the candidate cell includes timing advance value(s) of one or more candidate cells.
30. An information transfer method, configured in a terminal equipment, the method including:
   receiving DCI by a terminal equipment from a first network device DU, the DCI including random access configuration of a candidate cell and/or information on the candidate cell.
31. The method according to supplement 30, wherein the method further includes:
   initiating a random access procedure on the candidate cell according to the information on the candidate cell and the random access configuration of the candidate cell, to obtain a timing advance (TA) value of the candidate cell.
32. The method according to supplement 30, wherein the method further includes:
   determining the random access configuration of the candidate cell by the terminal equipment according to the information on the candidate cell.
33. The method according to supplement 32, wherein the the terminal equipment determines at least one of the following according to the information on the candidate cell:
   random access configuration included in candidate cell configuration;
   random access configuration for obtaining timing advance included in candidate cell configuration;
   random access configuration appearing first in candidate cell configuration;
   random access configuration appearing first in candidate cell configuration and used for obtaining timing advance;
   random access configuration included in candidate cell configuration, an a L1 measurement result of a corresponding downlink reference signal of the random access configuration being better than a configured threshold; and
   next available random access included in candidate cell configuration after DCI is received.
34. The method according to supplement 31, wherein,
   the timing advance value is an absolute timing advance value or a variable of an absolute timing advance value.
35. The method according to supplement 31 or 34, wherein the method further includes:
   determining uplink advance by the terminal equipment according to the timing advance value.
36. The method according to supplement 35, wherein that the the terminal equipment determines the uplink advance according to the timing advance value includes:
   that the terminal equipment determines the uplink advance according to an absolute timing advance value, or
   the terminal equipment determines the uplink advance according to an absolute timing advance value and a variable of the absolute timing advance value.
37. The method according to any one of supplement 31 and 34-36, wherein,
   the candidate cell is a cell with a downlink; and/or
   the candidate cell is a timing reference of the candidate cell and/or a candidate cell in a same TA group.
38. The method according to any one of supplement 31 and 34-37, wherein,
   a downlink timing reference is the candidate cell or a source cell or another candidate cell in a same TA group or a candidate cell in a same TA group that is able to be taken as a special cell.
39. The method according to any one of supplement 31 and 34-38, wherein,
   configuration of the timing reference is transmitted via an RRC message or MAC signaling or DCI.
40. The method according to any one of supplement 31 and 34-39, wherein the method further includes:
   receiving a random access response (RAR) or a cell switch command by the terminal equipment from the first network device DU, the random access response or cell switch command including the timing advance value of the candidate cell.
41. The method according to any one of supplement 31 and 34-40, wherein,
   the timing advance value of the candidate cell includes TA value(s) of one or more candidate cells.

## Claims

1. An information transfer apparatus, comprising:
a first transmitting unit configured to transmit a first F1 message comprising information for obtaining uplink synchronization on a candidate cell to a first network device DU by a network device CU of the candidate cell.

2. The apparatus according to claim 1, wherein,
the information for obtaining uplink synchronization on the candidate cell comprises at least one of random access configuration of the candidate cell, information on the candidate cell and a timing advance (TA) value.

3. The apparatus according to claim 2, wherein the apparatus further comprises at least one of the following units:
a second transmitting unit configured to transmit a message indicating one or more candidate cells by the network device CU to a second network device DU to request random access configuration of the indicated candidate cell;
a first receiving unit configured to receive the random access configuration of the candidate cell by the network device CU from the second network device DU; and
a second receiving unit configured to receive a response message of the first F1 message by the network device CU from the first network device DU.

4. The apparatus according to claim 2, wherein the apparatus further comprises at least one of the following units:
a third receiving unit configured to receive a request message of the random access configuration of the candidate cell by the network device CU from the first network device DU; or
a first determining unit configured to determine to initiate random access configuration by the network device CU.

5. The apparatus according to claim 2, wherein,
the timing advance value is an absolute timing advance value or a variable of an absolute timing advance value.

6. An information transfer apparatus, comprising:
a fifth receiving unit configured to receive a first F1 message comprising information for obtaining uplink synchronization on a candidate cell by a first network device DU from a network device CU of the candidate cell; and
a third transmitting unit configured to transmit DCI by the first network device DU to a terminal equipment.

7. The apparatus according to claim 6, wherein,
the information for obtaining uplink synchronization on the candidate cell comprises at least one of random access configuration of the candidate cell, information on the candidate cell and a timing advance (TA) value.

8. The apparatus according to claim 7, wherein the apparatus further comprises at least one of the following units:
a second determining unit configured to determine to initiate random access configuration by the first network device DU;
a fourth transmitting unit configured to transmit a request message of the random access configuration of the candidate cell by the first network device DU to the network device CU; and
a fifth transmitting unit configured to transmit a response message of the first F1 message by the first network device DU to the network device CU.

9. The apparatus according to claim 6, wherein,
the DCI comprises the random access configuration of the candidate cell and/or the information on the candidate cell.

10. The apparatus according to claim 9, wherein,
the DCI triggers the terminal equipment to initiate a random access procedure on the candidate cell.

11. The apparatus according to claim 7, wherein,
the timing advance value is an absolute timing advance value or a variable of an absolute timing advance value.

12. The apparatus according to claim 6, wherein the apparatus further comprises:
a sixth transmitting unit configured to transmit the timing advance value of the candidate cell by the first network device DU to the terminal equipment via a random access response (RAR) or a cell switch order.

13. An information transfer apparatus, configured in a terminal equipment, the apparatus comprising:
a sixth receiving unit configured to receive DCI from a first network device DU, the DCI comprising random access configuration of a candidate cell and/or information on the candidate cell.

14. The apparatus according to claim 13, wherein the apparatus further comprises:
a first initiating unit configured to initiate a random access procedure on the candidate cell according to the information on the candidate cell and the random access configuration of the candidate cell, to obtain a timing advance (TA) value of the candidate cell.

15. The apparatus according to claim 13, wherein the apparatus further comprises:
a first determining unit configured to determine the random access configuration of the candidate cell according to the information on the candidate cell.

16. The apparatus according to claim 15, wherein the random access configuration determined by the first determining unit according to the information on the candidate cell comprises at least one of the following:
random access configuration comprised in candidate cell configuration;
random access configuration for obtaining timing advance comprised in candidate cell configuration;
random access configuration appearing first in candidate cell configuration;
random access configuration appearing first in candidate cell configuration and used for obtaining timing advance;
random access configuration comprised in candidate cell configuration, an a L1 measurement result of a corresponding downlink reference signal of the random access configuration being better than a configured threshold; and
next available random access comprised in candidate cell configuration after DCI is received.

17. The apparatus according to claim 14, wherein the apparatus further comprises:
a second determining unit configured to determine uplink advance according to the timing advance value.

18. The apparatus according to claim 17, wherein that the second determining unit determines the uplink advance according to the timing advance value comprises:
that the second determining unit determines the uplink advance according to an absolute timing advance value, or
the second determining unit determines the uplink advance according to an absolute timing advance value and a variable of the absolute timing advance value.

19. The apparatus according to claim 14, wherein,
the candidate cell is a cell with a downlink; and/or
the candidate cell is a timing reference of the candidate cell and/or a candidate cell in a same TA group.

20. The apparatus according to claim 14, wherein,
a downlink timing reference is the candidate cell or a source cell or another candidate cell in a same TA group or a candidate cell in a same TA group that is able to be taken as a special cell.
